# EUROPEAN PATENT APPLICATION

(11) **EP 1 708 409 A2**
(43) Date of publication of application: **04.10.2006**
(21) Application number: 06251674.5
(22) Date of filing: 28.03.2006
(51) Int. Cl.: H04L 12/10

(54) **Systems and methods operable to allow loop powering of networked devices**

(30) Priority: 28.03.2005 US 665766 P; 19.08.2005 US 207601; 19.08.2005 US 207602; 19.08.2005 US 207595; 23.08.2005 US 209950; 26.10.2005 US 258972; 18.11.2005 US 282804; 23.11.2005 US 287408; 13.10.2005 US 249246; 25.03.2006 IB
(71) Applicant: Akros Silicon, Inc., Folsom, CA 95630 (US)
(72) Inventor: Camagna, John, El Dorado Hills CA 95762 (US); Crepin, Francois, Orangevale CA 95662 (US); Ghoshal, Sajol, El Dorado Hills CA 95762 (US); Crawley, Philip John, Folsom CA 95630 (US)
(74) Representative: Ertl, Nicholas Justin

(57) **Abstract**

Embodiments of the present invention provide a network device operable to receive a network signal that may include both power and data from a coupled network. This network device includes a network connector and an integrated circuit. The network connector physically couples the network device to the network. An optional protection circuit may provide surge protection or incoming network signals received by the network device through the network connector. An optional switching/rectifying circuit sees the output of the protection circuit and is operable to rectify a power signal when contained within the network signal. The integrated circuit further includes a power feed circuit conductively coupled to the protection circuit and the rectifying circuit. This power feed circuit is operable to separate and pass the received data signal to a network physical layer and separate and pass the received power signal to a power management module. The power management module electrically couples to the integrated circuit but is not necessarily part of the integrated circuit. The power management module is operable to at least partially power the network device for specific circuits within the network device from the received power signal.

## Description

### TECHNICAL FIELD OF THE INVENTION

The present invention relates generally to power distribution, and more particularly, a solid state transformer-less method for coupling high bandwidth data signals and power signals between a network and a network attached device.

### BACKGROUND OF THE INVENTION

Many networks such as local and wide area networks (LAN/WAN) structures are used to carry and distribute data communication signals between devices. The various network elements include hubs, switches, routers, and bridges, peripheral devices, such as, but not limited to, printers, data servers, desktop personal computers (PCs), portable PCs and personal data assistants (PDAs) equipped with network interface cards. All these devices that connect to the network structure require power in order to operate. The power of these devices may be supplied by either an internal or an external power supply such as batteries or an AC power via a connection to an electrical outlet.

Some network solutions offer to distribute power over the network in addition to data communications. The distribution of power over a network consolidates power and data communications over a single network connection to reduce the costs of installation, ensures power to key network elements in the event of a traditional power failure, and reduces the number of required power cables, AC to DC adapters, and/or AC power supplies which create fire and physical hazards. Additionally, power distributed over a network such as an Ethernet network may provide an uninterruptible power supply (UPS) to key components or devices that normally would require a dedicated UPS.

Additionally, the growth of network appliances, such as but not limited to, voice over IP (VOIP) telephones require power. When compared to their traditional counterparts, these network appliances require an additional power feed. One drawback of VOIP telephony is that in the event of a power failure, the ability to contact to emergency services via an independently powered telephone is removed. The ability to distribute power to network appliances or key circuits would allow network appliances, such as the VOIP telephone, to operate in a similar fashion to the ordinary analog telephone network currently in use.

The distribution of power over Ethernet network connections is in part governed by the IEEE Standard 802.3 and other relevant standards. These standards are incorporated by reference. However, these power distribution schemes within a network environment typically require cumbersome, real estate intensive, magnetic transformers. Additionally, power over Ethernet (PoE) requirements under 802.3 are quite stringent and often limit the allowable power.

There are many limitations associated with using these magnetic transformers. Transformer core saturation can limit the current that can be sent to a power device (PD). This may further limit the performance of the communication channel. The cost and board space associated with the transformer comprise approximately 10 percent of printed circuit board (PCB) space within a modem switch. Additionally, failures associated with transformers often account for a significant number of field returns. The magnetic fields associated with the transformers can result in lower electromagnetic interference (EMI) performance.

Additionally, the power fed to the PD may be limited. One solution provided by the next generation POE standard utilizes multiple twisted pairs to source current and multiple twisted pairs to return. Due to mismatches between the twisted pairs, most of the current may flow in one pair. This may causes an overload of the line that potentially damage or overheat the line and POE. Thus, there is a need for an improved approach to distributing power in a network environment that addresses limitations imposed by magnetic transformers while maintaining the benefits thereof.

### SUMMARY OF THE INVENTION

Embodiments of the present invention are directed to systems and methods that are further described in the following description and claims. Advantages and features of embodiments of the present invention may become apparent from the description, accompanying drawings and claims.

### BRIEF DESCRIPTION OF THE DRAWINGS

For a more complete understanding of the present invention and the advantages thereof, reference is now made to the following description taken in conjunction with the accompanying drawings wherein:

FIG. 1A depicts current Ethernet network appliances attached to the network and powered separately and their separate power connections;

FIG. 1B depicts various Ethernet network powered devices (PDs) in accordance with embodiments of the present invention;

FIG. 2A shows a traditional real-estate intensive transformer based Network Interface Card (NIC);

FIG. 2B provides a traditional functional block diagram of magnetic-based transformer power supply equipment (PSE);

FIG. 3A provides a functional block diagram of a network powered device interface utilizing non-magnetic transformer and choke circuitry in accordance with embodiments of the present invention;

FIG. 3B provides a functional block diagram of a PSE utilizing non-magnetic transformer and choke circuitry in accordance with embodiments of the present invention;

FIG. 4A illustrates two allowed power feeding schemes per the 802.3af standard;

FIG. 4B illustrates the use of embodiments of the present invention to deliver both the power feeding schemes illustrated with FIG. 4A allowed per the 802.3af standard;

FIG. 5A shows an embodiment of a network powered device (PD) in accordance with an embodiment of the present invention that integrates devices at the IC level for improved performance;

FIG. 5B shows an embodiment of a power source equipment (PSE) network device in accordance with an embodiment of the present invention that integrates devices at the IC level for improved performance;

FIG. 6A illustrates the technology associated with embodiments of the present invention as applied in the case of an enterprise VoIP phone for PD applications;

FIG. 6B illustrates the technology associated with an embodiment of the present invention as applied in the case of a network router for PSE applications;

FIG. 7 illustrates one embodiment of a power feed circuit in accordance with an embodiment of the present invention;

FIG. 8 illustrates one embodiment of a power feed circuit in accordance with an embodiment of the present invention;

FIG. 9 illustrates one embodiment of an insertion loss circuit in accordance with an embodiment of the present invention;

FIG. 10 illustrates one embodiment of a power feed circuit diagram in accordance with an embodiment of the present invention;

FIG. 11 illustrates one embodiment of a power feed circuit diagram in accordance with an embodiment of the present invention operable to support power distribution schemes operable to provide more power than alternative A or alternative B of 802.3af (i.e. PoE plus);

FIG. 12 is a logic flow diagram in accordance with an embodiment of the present invention;

FIG. 13 is a logic flow diagram in accordance with an embodiment of the present invention operable to provide a method for high voltage power feed on differential cable pairs;

FIG. 14 is a logic flow diagram in accordance with an embodiment of the present invention operable to provide a method for dynamic insertion loss control for 10/100/1000 MHz Ethernet signaling;

FIGs. 15A and 15B illustrate various embodiments of an electrostatic discharge circuit in accordance with embodiments of the present invention;

FIG. 16 provides a logic flow diagram in accordance with an embodiment of the present invention operable to provide a method for electrostatic discharge protection;

FIG. 17 illustrates one embodiment of an insertion loss circuit in accordance with an embodiment of the present invention;

FIG. 18 is a logic flow diagram in accordance with an embodiment of the present invention;

FIGs. 19A-19B illustrate various embodiments of a power feed circuit in accordance with embodiments of the present invention;

FIG. 20 illustrates one embodiment of a power feed circuit diagram in accordance with an embodiment of the present invention;

FIG. 21A is a 2 twisted pair Alternative A embodiment operable to support 10/100M Ethernet signaling;

FIG. 21B is a 2 twisted pair Alternative B embodiment operable to support 10/100M Ethernet signaling;

FIG. 21C is a 2 twisted pair Alternative A embodiment operable to support 10/100/1000 megahertz Ethernet signaling;

FIG. 21D is a 4 twisted pair operable to support 10/100M Ethernet signaling;

FIG. 21E is a 4 twisted pair operable to support 10/100/1000 megahertz Ethernet signaling;

FIG. 22 is a logic flow diagram in accordance with an embodiment of the present invention;

FIG. 23A provides a block diagram of a circuit operable to produce a PoE signal;

FIG. 23B provides a block diagram of an IC in accordance with embodiments of the present invention;

FIG. 24 provides a block diagram of an IC having various circuits which require different voltages on a single substrate in accordance with an embodiment of the present invention; and

FIG. 25 provides a logic flow diagram in accordance with an embodiment of the present invention.

### DETAILED DESCRIPTION

Preferred embodiments of the present invention are illustrated in the FIGs., like numerals being used to refer to like and corresponding parts of the various drawings.

The 802.3 Ethernet network Standards, which is incorporated herein by reference, allow loop powering of remote Ethernet network devices (802.3af). The Power over Ethernet (PoE) standard and other like standards intends to standardize the delivery of power over Ethernet network cables in order to have remote client devices powered through the network connection. The side of link that supplies the power is referred to as Powered Supply Equipment (PSE). The side of link that receives the power is referred to as the Powered device (PD).

Replacing the magnetic transformer of prior PoE systems while maintaining the functionality of the transformer has been subsumed into the embodiments of the present invention. In order to subsume the functionality of the transformer, the circuits provided by embodiments of the present invention, which may take the form of ICs or discrete components, are operable to handle these functions. These functions may include, in the case of an Ethernet network application:
1) coupling of a maximum of 57V (SELV) to the IC with the possibility of 1V peak-peak swing of a 10/100/1000 megahertz Ethernet signaling, (2.8Vp_p for MAU device);
2) splitting the signal; 57V DC to the 802.3af Power Control unit and AC data signal to the PHY (TX and RX), while meeting the high voltage stress.
3) couple lower voltage (5v and 3.3v) PHY transceiver to high voltage cable (57V)
4) Supply power of 3.3V or 12V through DC-DC converter;
5) Withstand system-level lighting strikes: indoor lighting strike (ITU K.41); outdoor lighting strike (IEC 60590)
6) Withstand power cross @60Hz. (IEC 60590)
7) Fully Supports IEEE 802.3af Specification
Other network protocols may allow different voltage (i.e., a 110 volt circuit coupling to the IC) data rates (i.e., 1 GBPS or higher), and power rating.

In a solid-state implementation, common mode isolation between the earth ground of the device and the cable is required. Fixed common mode offsets of up to 1500V are possible in traditional telephony systems. Embodiments of the present invention discussed herein may deliver power via cable where the earth ground is used solely for grounding of the PD chassis. As there is no electrical connection between the earth and PoE ground, large voltage offsets are allowable.

Second, another transformer function provides surge and voltage spike protection from lightning strike and power cross faults. Wires inside the building comply with the ITU recommendation K.41 for lightning strikes. Lines external to the building must comply with IEC60590. Lightning strike testing as specified in these Standards consists in a common mode voltage surge applied between all conductors and the earth or chassis ground. As embodiments of the present invention uses the earth ground only for chassis protection, minimal stress will occur across the device, thus simplifying the circuits required by embodiments of the present invention.

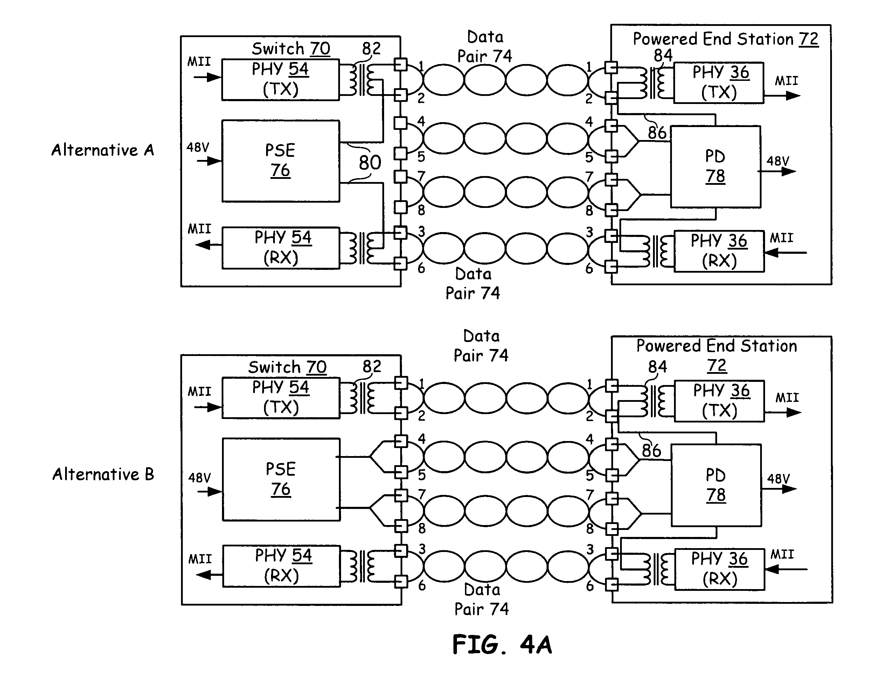

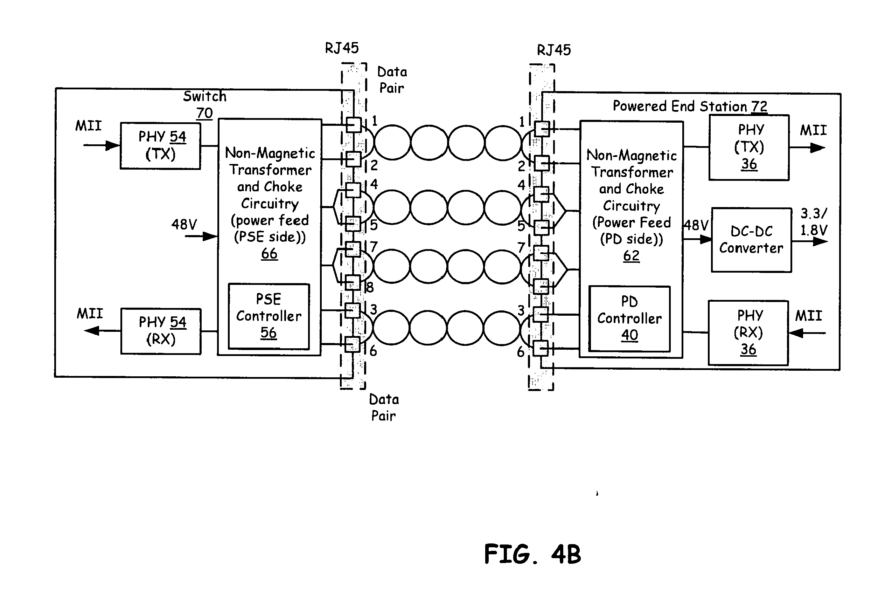

According to one 802.3.af power scheme, power is delivered via the center tap of the line side transformer to receive signal transformers for transformer based designs. In the next generation POE standard, 4 twisted pairs may be used to provide DC power feed to remote powered devices (PD). Two twisted pairs will source current, two will return. This will be discussed in more detail with reference to FIGs. 4A and 4B. The embodiments of the present invention may take up to 400ma DC from the common mode of the signal pair without disturbing the AC (1 MHz-100 MHz) differential signals on the transmit/receive pairs. Further insertion power losses associated with the differential signal should be minimal in order to maximize useful power supplied via the network connection to the PD. Embodiments of the present invention may support PoE side applications as well.

Embodiments of the present invention are operable to support PoE side applications as well. As several functions are integrated together, the entire IC ground will track the Ethernet line ground. This means that the IC potential will vary significantly (1500V) from the chassis ground. As no power is necessary from the local supply, the voltage drop will occur across an air gap.

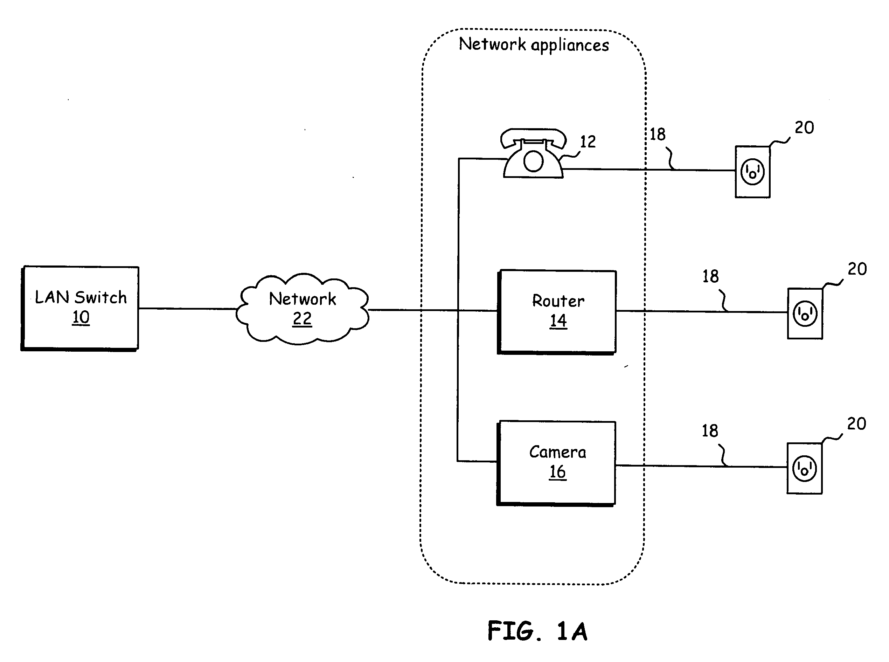

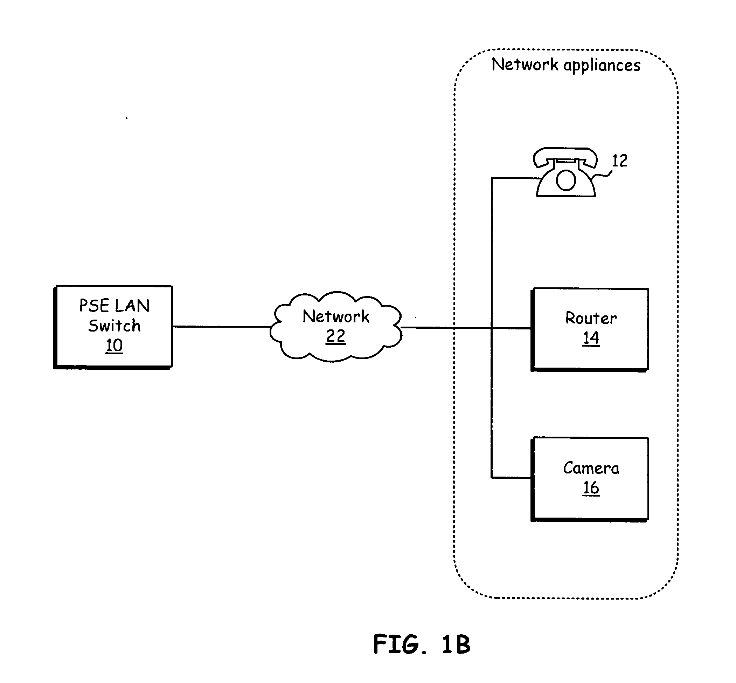

FIG. 1A illustrates exemplary devices where power is supplied separately to network attached client devices 12-16 that may benefit from receiving power and data via the network connection. These devices are serviced by LAN switch 10 for data. Additionally, each client device 12-16 has separate power connections 18 to electrical outlets 20. FIG. 1B illustrates exemplary devices where switch 10 is a power supply equipment (PSE) capable power-over Ethernet (PoE) enabled LAN switch that provides both data and power signals to client devices 12-16. The network attached devices may include VOIP telephone 12, access points, routers, gateways 14 and/or security cameras 16, as well as other known network appliances. This eliminates the need for client devices 12-16 to have separate power connections 18 to electrical outlets 20 as shown in FIG. 1A which are no longer required in FIG. 1B. Eliminating this second connection ensures that the network attached device will have greater reliability when attached to the network with reduced cost and facilitated deployment.

Specific embodiments of the present invention may be incorporated within various powered network attached devices or Ethernet network appliances. Such appliances include, but are not limited to VoIP telephones, routers, printers, and other like devices known to those having skill in the art. Such exemplary devices are illustrated in FIG. 1B.

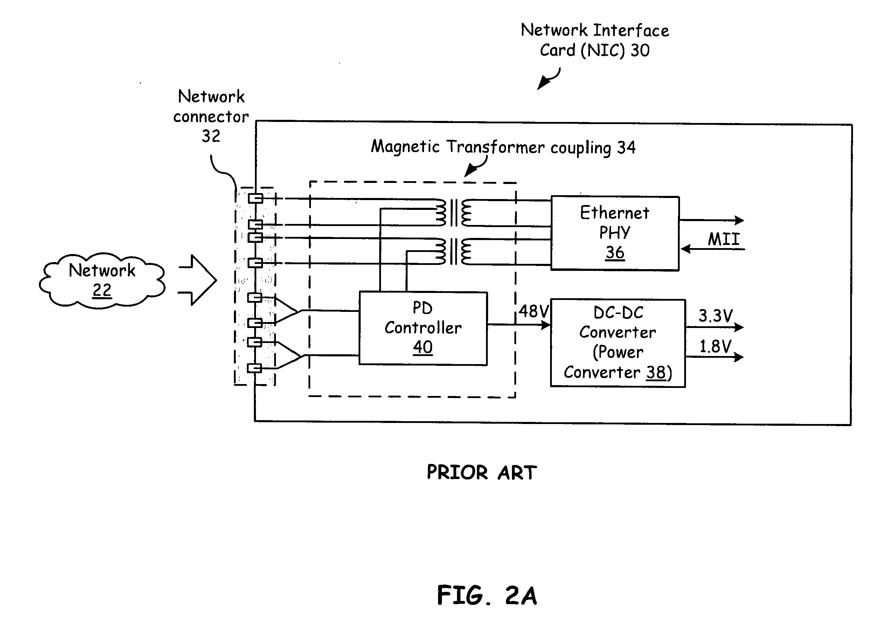

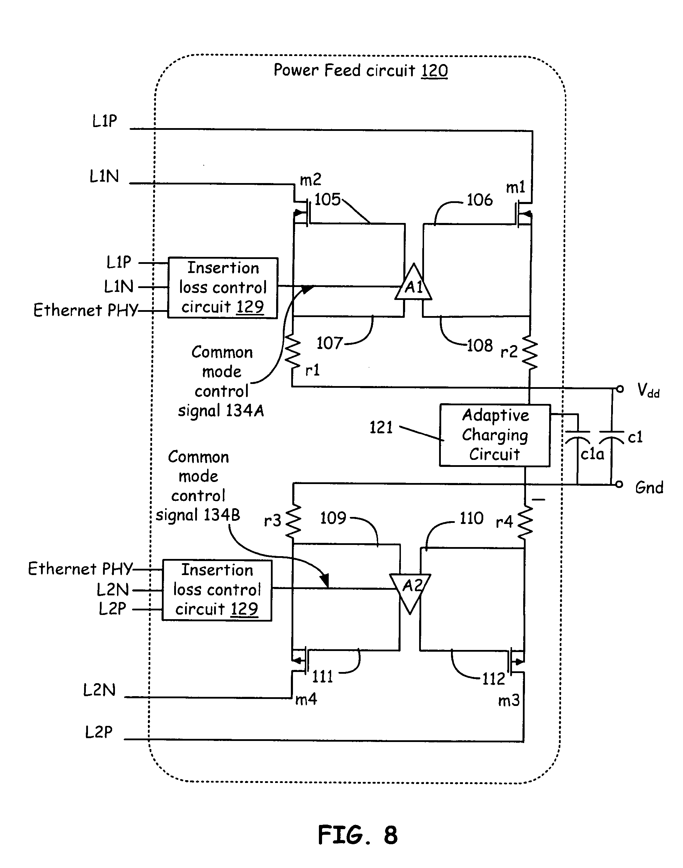

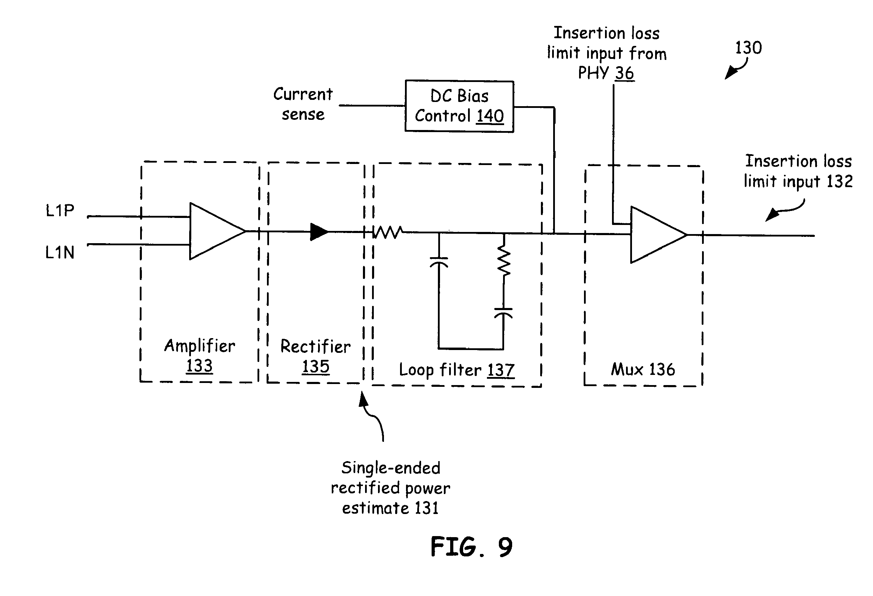

FIG. 2A provides a typical prior art network interface card 30 for a PD that includes network connector 32, magnetic transformer 34, Ethernet PHY 36, power converter 38, and PD controller 40. Typically, these elements are all separate and discrete devices. Embodiments of the present invention are operable to eliminate the magnetic network transformer 34 and replace this discrete device with a power feed circuit such as the one provided in FIGs. 8A and 8B or one operable to perform the functions described with respect to the logic flow diagram of FIG. 9. This power feed circuit may be implemented within an integrated circuit (IC) or as discrete components. Additionally, embodiments of the present invention may incorporate other functional specific processors, or any combination thereof into a single IC.

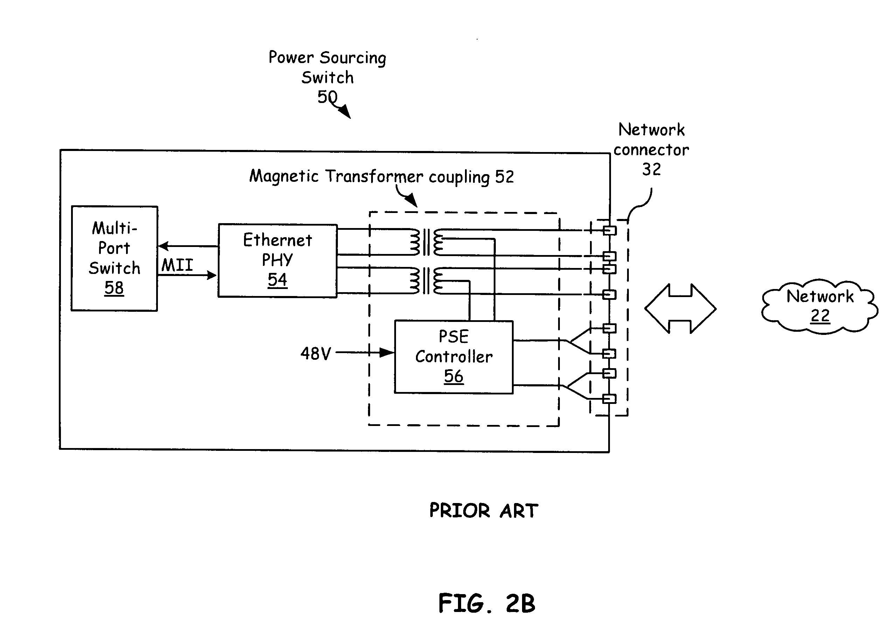

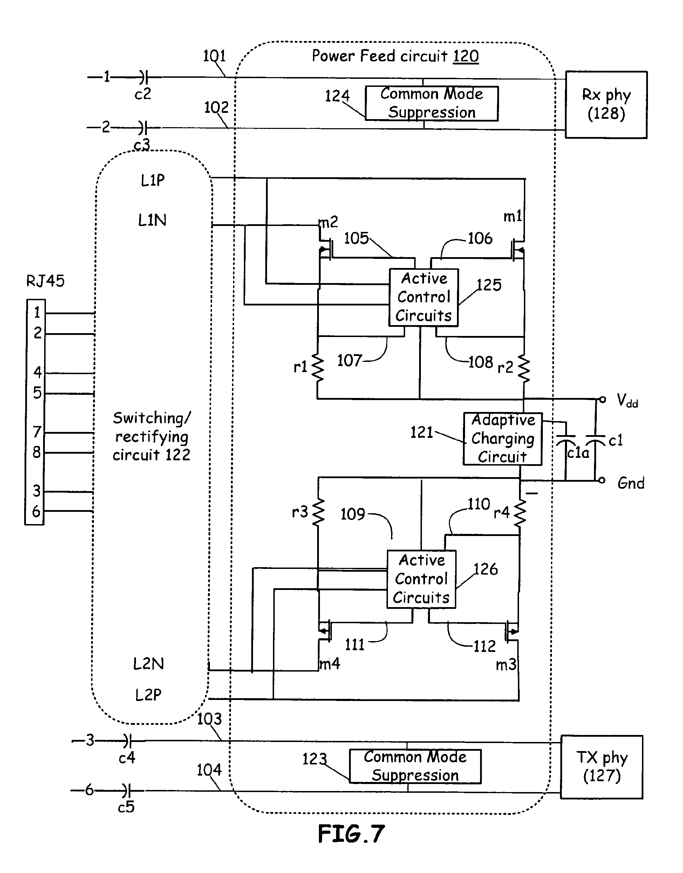

FIG. 2B provides a typical PSE prior art device. Here, power sourcing switch 50 includes a network connector 32, magnetically coupled transformer 52, Ethernet physical layer (PHY) 54, PSE controller 56, and multi-port switch 58. Typically these elements are all separate and discreet devices. Embodiments of the present invention may eliminate the magnetically coupled transformer 52 and replace this transformer with discreet devices that may be implemented within ICs or as discreet devices that minimizes insertion loss in order to increase power fed to downstream components. Such power feed circuits are discussed with reference to FIG. 7 and following.

Although the description herein may focus and describe a system and method for coupling high bandwidth data signals and power distribution between the IC and cable that uses transformer-less ICs with particular detail to the 802.3af Ethernet network standard, these concepts may be applied in non-Ethernet network applications and non 802.3af applications. Further, these concepts may be applied in subsequent standards that supersede the 802.3af standard.

Embodiments of the present invention may provide solid state (non-magnetic) transformer circuits operable to couple high bandwidth data signals and power signals with new mixed-signal IC technology in order to eliminate cumbersome, real-estate intensive magnetic-based transformers 34 and 52 as pictured in FIGs. 2A and 2B.

Modem communication systems use transformers 34 and 52 to provide common mode signal blocking, 1500 volt isolation, and AC coupling of the differential signature as well as residual lightning or electromagnetic shock protection. These functions are replaced by a solid state or other like circuits in accordance with embodiments of the present invention wherein the circuit may couple directly to the line and provide high differential impedance and low common mode impedance. High differential impedance allows separation of the PHY signal from the power signal. The low common mode impedance removes the need for a choke. This allows power to be tapped from the line. The local ground plane may float in order to eliminate the need for 1500 volt isolation. Additionally through a combination of circuit techniques and lightning protection circuitry, it is possible to provide voltage spike or lightning protection to the network attached device. This eliminates another function performed by transformers in traditional systems or arrangements. It should be understood that the technology may be applied anywhere where transformers are used and should not be limited to Ethernet network applications.

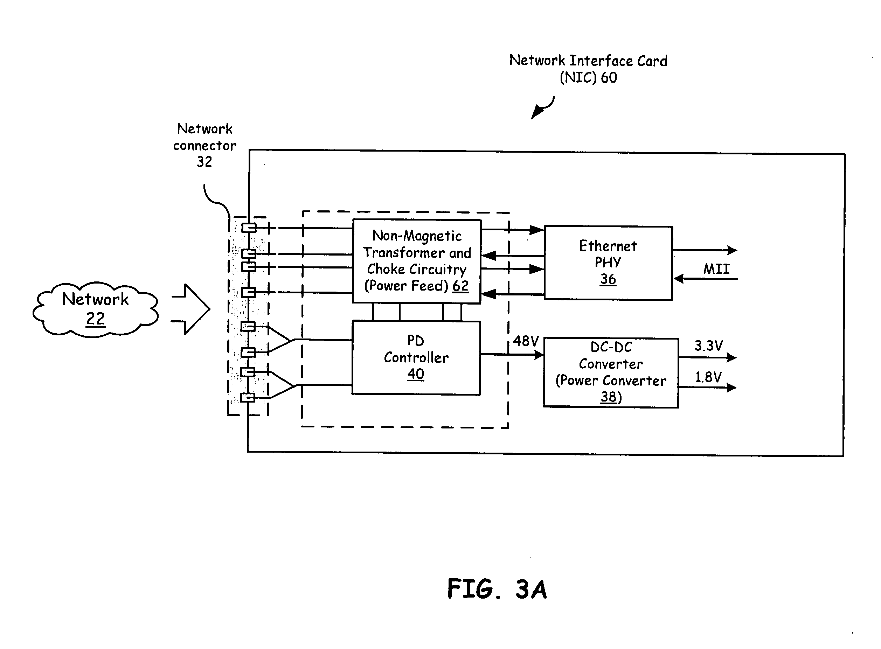

FIG. 3A is a functional block diagram of a network interface 60 that includes network connector 32, non-magnetic transformer and choke power feed circuitry 62, network physical layer 36, and power converter 38. Thus, FIG 3A replaces magnetic transformer 34 with circuitry 62. In the context of an Ethernet network interface, network connector 32 may be a RJ45 connector operable to receive a number of twisted pairs. Protection and conditioning circuitry may be located between network connector 32 and non-magnetic transformer and choke power feed circuitry 62 to provide surge protection in the form of voltage spike protection, lighting protection, external shock protection or other like active functions known to those having skill in the art. Conditioning circuitry may take the form of a diode bridge or other like rectifying circuit. Such a diode bridge may couple to individual conductive lines 1-8 contained within the RJ45 connector. These circuits may be discrete components or an integrated circuit within non-magnetic transformer and choke power feed circuitry 62.

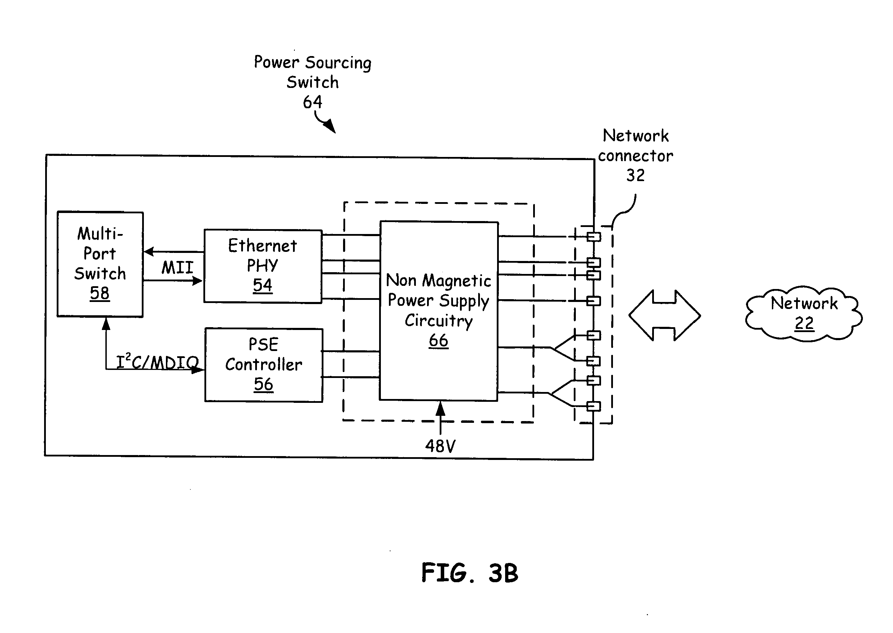

In an Ethernet network application, the 802.3af standard (PoE standard) provides for the delivery of power over Ethernet cables to remotely power devices. The portion of the connection that receives the power may be referred to as the powered device (PD). The side of the link that provides the power is referred to as the power sourcing equipment (PSE). Two power feed options allowed in the 802.3af standard are depicted in FIG. 4A. In the first alternative, which will be referred to as alternative A, LAN switch 70, which contains PSE 76 feeds power to the Ethernet network attached device (PD) 72 along the twisted pair cable 74 used for the 10/100 Ethernet signal via the center taps 80 of Ethernet transformers 82. On the line side of the transfer, transformers 84 deliver power to PD 78 via conductors 1 and 2 and the center taps 86 and return via conductors 3 and 6 and the center taps 86. In the second alternative, conductors 4, 5, 7 and 8 are used to transmit power without transformers. Conductors 4, 5, 7 and 8 remain unused for 10/100 Ethernet data signal transmissions. FIG. 4B depicts that the network interface of FIG. 3A and power sourcing switch of FIG. 3B may be used to implements these alternatives and their combinations as well.

The next generation PoE standard, uses multiple (4) twisted pairs to feed DC power to remote PD). Two twisted pairs (1 and 2, and 4 and 5) will source current; two twisted pairs (7 and 8, and 3 and 6) will return. The scheme is operable to provide more power than alternative A or alternative B of 802.3af (i.e. PoE plus) In PoE plus, PSE 66 feeds power to the Ethernet attached device, PD 62, along the twisted pair cables 74 used for the 10/100 Ethernet signal via the center taps 80 of Ethernet transformers 82. Conductors 4, 5, 7 and 8 are used to transmit power without transformers. However, other embodiments may use transformers or solid state PSE to supply power to any twisted pair. Data communications may be optionally used for Ethernet data signal transmissions.

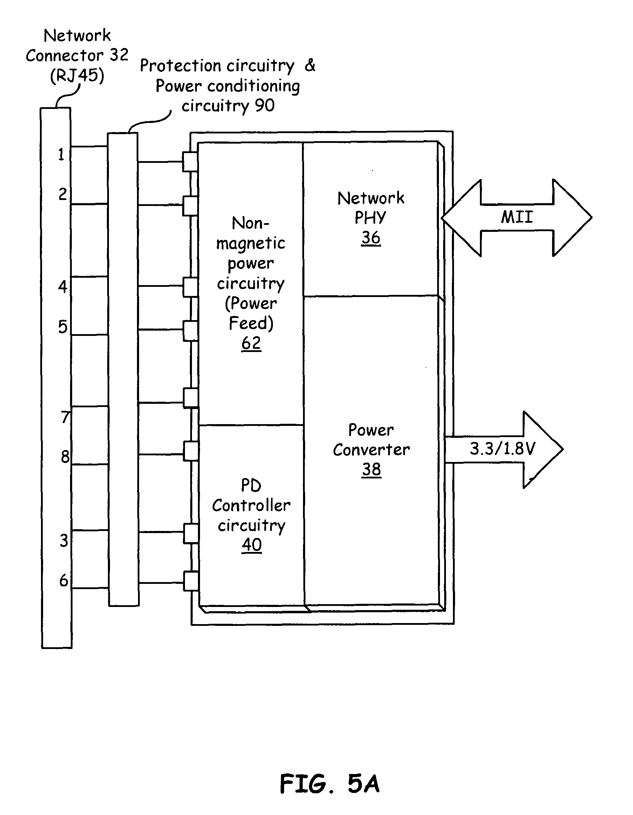

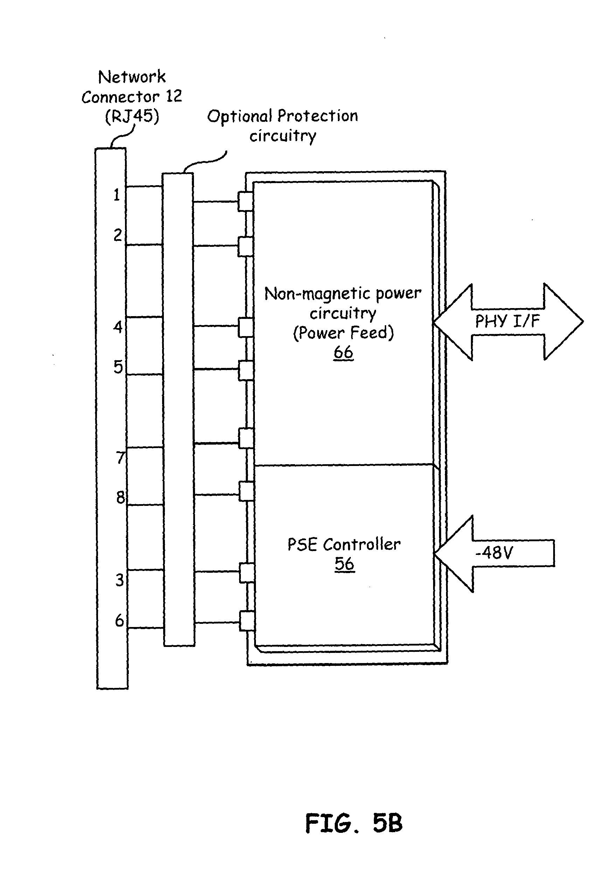

Returning to FIG. 3A, conductors 1 through 8 of the network connector 32, when this connector takes the form of an RJ45 connector, couple to non-magnetic transformer and choke power feed circuitry 62 regardless of whether the first or second alternative provided by 802.3af standard is utilized. These alternatives will be discussed in more detail with reference to FIGs. 5A and 5B. Non-magnetic transformer and choke power feed circuitry 62 may utilize the power feed circuit of FIGs. 7 and 8 to receive and separate the data signal portion from the power signal portion. This data signal portion may then be passed to network physical layer 36 while the power signal is passed to power converter 38. This function may be performed by the a direct connection module operable to separate the data signal from the Ethernet signal, wherein the data signal is passed to the Ethernet PHY module of the IC.

In the instance where network interface 60 is used to couple the network attached device or PD to an Ethernet network, network physical layer 36 may be operable to implement the 10 Mbps, 100 Mbps, and/or 1 Gbps physical layer functions as well as other Ethernet data protocols that may arise. The Ethernet PHY 36 may additionally couple to an Ethernet media access controller (MAC). The Ethernet PHY 36 and Ethernet MAC when coupled are operable to implement the hardware layers of an Ethernet protocol stack. This architecture may also be applied to other networks. Additionally, in the event that a power signal is not received but a traditional, non-power Ethernet signal is received the nonmagnetic power feed circuitry 62 will still pass the data signal to the network PHY.

The power signal separated from the network signal within non-magnetic transformer and choke power feed circuit 62 by the power feed circuit is provided to power converter 38. Typically the power signal received will not exceed 57 volts SELV (Safety Extra Low Voltage). Typical voltage in an Ethernet application will be 48-volt power. Power converter 38 may then further transform the power as a DC to DC converter in order to provide 1.8 to 3.3 volts, or other voltages as may be required by many Ethernet network attached devices.

Non-magnetic power feed circuitry eliminates the use of magnetic transformers within integrated system solutions. These integrated solutions provide the opportunity to increase system density by replacing magnetic transformers with power feed circuitry in the form of an IC or discreet elements such as those described by circuits provided in FIG. 7 and following.

FIG. 3B is a functional block diagram of a power-sourcing switch 64 that includes network connector 32, Ethernet or network physical layer 54, PSE controller 56, multi-port switch 58, and non-magnetic transformer and choke power supply circuitry 66. FIG. 3B is similar to that provided in FIG. 2B, wherein the transformer has been replaced with non-magnetic transformer and choke power supply circuitry 66. This power-sourcing switch may be used to supply power to network attached devices in place of the power source equipment disclosed in FIG. 2B.

Network interface 60 and power sourcing switch 64 may be applied to an Ethernet application or other network-based applications such as, but not limited to, a vehicle-based network such as those found in an automobile, aircraft, mass transit system, or other like vehicle. Examples of specific vehicle-based networks may include a local interconnect network (LIN), a controller area network (CAN), or a flex ray network. All of these may be applied specifically to automotive networks for the distribution of power and data within the automobile to various monitoring circuits or for the distribution and powering of entertainment devices, such as entertainment systems, video and audio entertainment systems often found in today's vehicles. Other networks may include a high speed data network, low speed data network, time-triggered communication on CAN (TTCAN) network, a J1939-compliant network, ISO11898-compliant network, an ISO11519-2-compliant network, as well as other like networks known to that having skill in the art. Other embodiments may supply power to network attached devices over alternative networks such as but not limited to a HomePNA local area network and other like networks known to those having skill in the art. The HomePNA uses existing phone wires to share a single network connection within a home or building. Alternatively, embodiments of the present invention may be applied where network data signals are provided over power lines.

Non-magnetic transformer and choke power feed circuitry 62 and 66 eliminate the use of magnetic transformers with integrated system solutions that provide the opportunity to increase system density by replacing magnetic transformers 34 and 52 with solid state power feed circuitry in the form of an IC or discreet component such as the power feed circuit of FIG. 7 and following.

FIG. 5A provides an illustration of an embodiment wherein the non-magnetic transformer and choke power feed circuitry 62, network physical layer 36, power distribution management circuitry 54, and power converter 38 are integrated into a single integrated circuit as opposed to being discrete components at the printed circuit board level. Optional protection and power conditioning circuitry 90 may be used to interface the IC to the network connector.

The Ethernet PHY may support the 10/100/1000 Mbps data rate and other future data networks such as a 10000 Mbps Ethernet network. The non-magnetic transformer and choke power feed circuitry 62 will supply the line power minus the insertion loss directly to the power converter 38. This will convert the power first to a 12v supply, then subsequently to the lower supply levels. This circuit may be implemented in the 0.18 or 0.13 micron process or other like process known to those having skill in the art.

The non-magnetic transformer and choke power feed circuitry 62 implements three main functions: 802.3.af signaling and load compliance, local unregulated supply generation with surge current protection and signal transfer between the line and integrated Ethernet PHY. As the devices are directly connected to the line, the circuit may be required to withstand a secondary lightning surge.

In order for the PoE to be 802.3af standard compliant, the PoE may be required to be able to accept power with either power feeding schemes illustrated in FIG. 4A and 4B and handle power polarity reversal. A rectifier, such as a diode bridge, or a switching network, may be implemented to ensure power signals having an appropriate polarity are delivered to the nodes of the power feed circuit. Any one of the conductors 1,4,7 or 3 of the network RJ45 connection can forward bias to deliver current and any one of the return diodes connected can forward bias provide a return current path via one of the remaining conductors. Conductors 2, 5, 8 and 4 are connected in a similar fashion.

The non-magnetic transformer and choke power feed circuitry when applied to PSE may take the form of a single or multiple port switch in order to supply power to single or multiple devices attached to the network. FIG. 5B provides a functional block diagram of power sourcing switch operable to receive power and data signals and then combine these with power signals, which are then distributed via an attached network. In the case where power sourcing switch 64 is a gateway or router, a highspeed uplink couples to a network such as an Ethernet network or other like network. This data signal is relayed via network PHY 54 and then provided to non-magnetic transformer and choke power feed circuitry 66. The PSE switch may be attached to an AC power supply or other internal or external power supply in order to provide a power signal to be distributed to network-attached devices that couple to power sourcing switch 64. Power controller 56 within or coupled to non-magnetic transformer and choke power feed circuitry 66 may determine, in accordance with IEEE standard 802.3af, whether or not a network-attached device, in the case of an Ethernet network-attached device, is a device operable to receive power from power supply equipment. When it is determined in the case of an 802.3af compliant PD is attached to the network, power controller 56 may supply power from power supply to non-magnetic transformer and choke power feed circuitry 66, which is then provided to the downstream network-attached device through network connectors, which in the case of the Ethernet network may be an RJ45 receptacle and cable.

The 802.3af Standard is intended to be fully compliant with all existing non-line powered Ethernet network systems. As a result, the PSE is required to detect via a well defined procedure whether or not the far end is PoE compliant and classify the amount of needed power prior to applying power to the system. Maximum allowed voltage is 57 volts to stay within the SELV (Safety Extra Low Voltage) limits.

In order to be backward compatible with non-powered systems the DC voltage applied will begin at a very low voltage and only begin to deliver power after confirmation that a PoE device is present. In the classification phase, the PSE applies a voltage between 14.5V and 20.5V, measures the current and determines the power class of the device. In one embodiment the current signature is applied for voltages above 12.5V and below 23 Volts. Current signature range is 0-44mA.

The normal powering mode is switched on when the PSE voltage crosses 42 Volts. At this point the power MOSFETs are enabled and the large bypass capacitor begins to charge.

The maintain power signature is applied in the PoE signature block - a minimum of 10mA and a maximum of 23.5kohms may be required to be applied for the PSE to continue to feed power. The maximum current allowed is limited by the power class of the device (class 0-3 are defined). For class 0, 12.95W is the maximum power dissipation allowed and 400ma is the maximum peak current. Once activated, the PoE will shut down if the applied voltage falls below 30V and disconnect the power MOSFETs from the line.

The power feed devices in normal power mode provide a differential open circuit at the Ethernet signal frequencies and a differential short at lower frequencies. The common mode circuit will present the capacitive and power management load at frequencies determined by the gate control circuit.

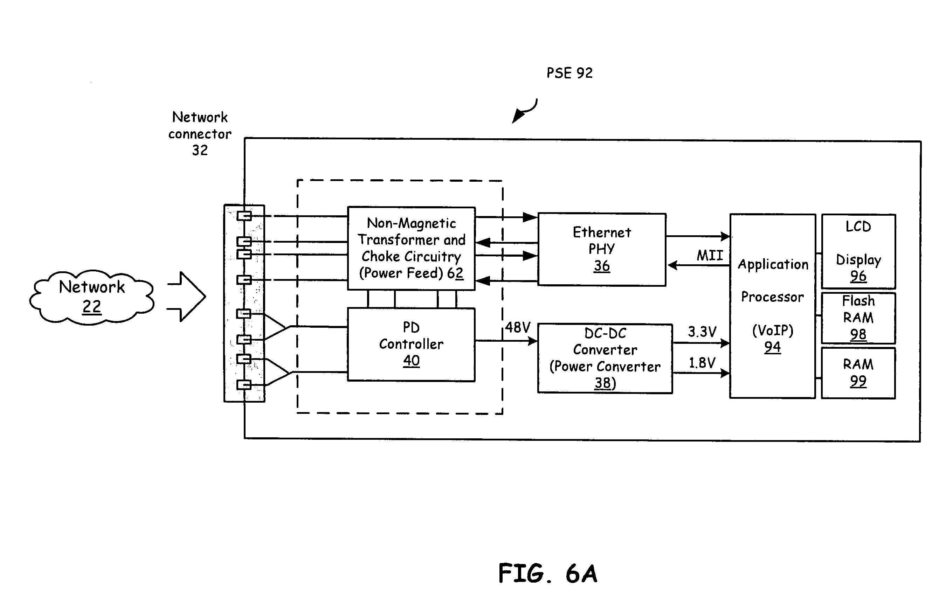

FIG. 6A provides a functional block diagram of a specific network attached appliance 92. In this case, the network attached appliance is a VOIP telephone. Network connector 32 takes form of an Ethernet network connector, such as RJ45 connector, and passes Ethernet signals to power feed circuitry 62 and PD controller 40. Non-magnetic transformer and choke power feed circuitry 62 separates the data signal and power signal. An optional connection to an external isolated power supply allows the network attached device to be powered when insufficient power is available or when more power is required than can be provided over the Ethernet connection. The data signal is provided to network physical layer 36. Network physical layer 36 couples to a network MAC to execute the network hardware layer. An application specific processor, such as VOIP processor 94 or related processors, couples to the network MAC. Additionally, the VOIP telephone processors and related circuitry (display 96 and memory 98 and 99) may be powered by power converter 38 using power fed and separated from the network signal by non-magnetic transformer and choke power feed circuitry 62. In other embodiments, other network appliances, such as cameras, routers, printers and other like devices known to those having skill in the art are envisioned.

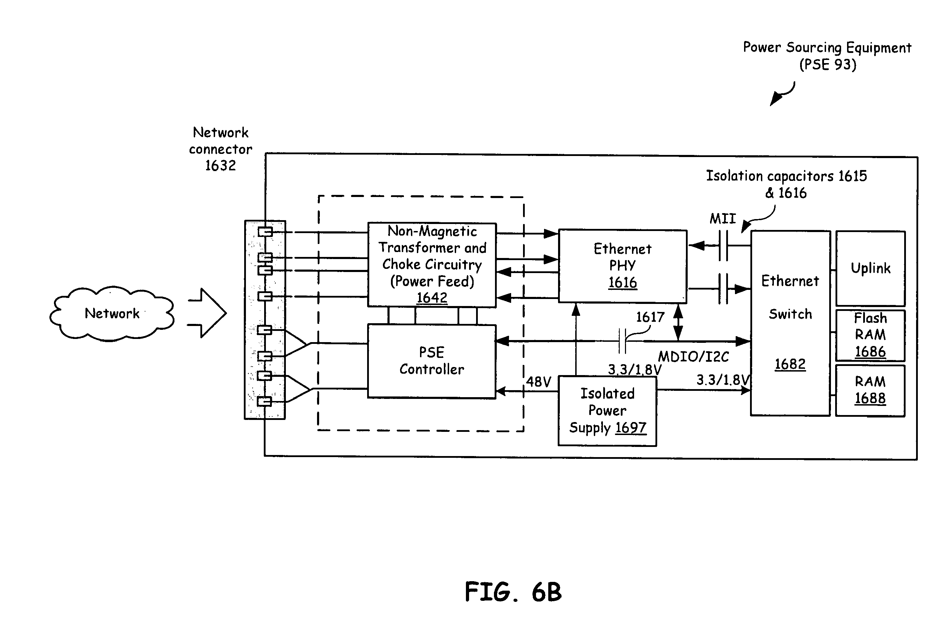

FIG. 6B provides a functional block diagram of a specific network attached PSE device 93. In this embodiment, PSE network device 93 is an Ethernet router. Network connector 32 may take the form of Ethernet network connector such as an RJ-45 connector, and is operable to distribute Ethernet signals that include both power and data as combined by the integrated circuits within PSE 93. PSE 93 includes an integrated circuit 66 which serves as a nonmagnetic transformer and choke circuit. Various embodiments of the nonmagnetic transformer and choke circuitry will be discussed in further detail with references to FIGs. 7A-7B and 8A-8E.

The 1500 volt isolation between earth ground and the PSE network device may be achieved through various means. The data connections may be capacitively isolated, optically isolated or isolated using a transformer. The power connection is isolated using one or more isolated power supplies. Capacitors 115, 116 and optocoupler 117 in Figure 6B are one example of this isolation.

The PSE devices may be a single port or multi-port. As a single port this device can also be applied to a mid-span application. Data is provided to Ethernet physical layer 54 either from network devices attached to network connector 32 or data received from an external network via internet switch 58 and an uplink. Ethernet switch 58 could be an application specific processor or related processors that are operable to couple PSE 93 via an uplink to an external network.

PSE devices may be integrated into various switches and routers for enterprise switching applications. However, in non-standard networks e.g. automotive etc., these PSE devices may be integrated into controller for the attached devices. In the case of multimedia or content distribution, these PSE devices may be incorporated into a controller/set-top box that distributes content and power to attached devices.

Nonmagnetic transformer and choke circuitry 66 receives data from Ethernet physical layer 54. Additionally, power is supplied to the nonmagnetic transformer and choke circuitry 66 from isolated power supply 97. In one embodiment this is a 48-volt power supply. However, this power distribution system may be applied to other power distribution systems, such as 110 volt systems as well. PSE controller 56 receives the power signal from isolated power supply 97 and is operable to govern the power signal content within the Ethernet signal supplied by nonmagnetic transformer and choke circuitry 66. For example, PSE controller 56 may limit the Ethernet power produced by nonmagnetic transformer and choke circuitry 66 based on the requirements of an attached PD. Thus PSE controller 56 is operable to ensure that attached network PDs are not overloaded and are given a proper power signal. Power supply 97 also supplies as shown a power signal to Ethernet PHY 54, Ethernet switch 58.

Isolated power supply 97 may be attached to an AC power supply or other internal or external power supply in order to provide a power signal to be distributed to network-attached devices that couple to PSE 93. PSE controller 56 may determine, in accordance with IEEE standard 802.3af, whether or not a network-attached device, in the case of an Ethernet-attached device, is a device operable to receive power from power supply equipment. When it is determined that an 802.3af compliant PD is attached to the network, PSE controller 56 may supply power from power supply 97 to nonmagnetic transformer and choke circuitry 66, which is then provided to the downstream network-attached device through network connectors 32.

The 802.3af Standard is intended to be fully compliant with all existing non-line powered Ethernet systems. As a result, the PSE network device is required to detect via a well defined procedure whether or not the far end network attached device is POE compliant and classify the amount of needed power prior to applying power to the system. Maximum allowed voltage is 57 volts to stay within the SELV (Safety Extra Low Voltage) limits.

In order to be backward compatible with non-powered systems the DC voltage applied will begin at a very low voltage and only begin to deliver power after confirmation that a POE device is present. During classification the PSE network device applies a voltage between 14.5V and 20.5V, and measures the current to determine the power class of the device.

The PSE network device enters a normal power supply mode after determining that the PD is ready to receive power. At this point the 48V supply is connected to the Ethernet cable. During the normal power supply mode, a maintain power signature is sensed by the PSE to continue supplying power. The maximum current allowed is limited by the power class of the network attached device.

The power feed devices m1,m2,m3 and m4 shown in Figure 7A in normal power mode provide a differential open circuit at the Ethernet signal frequencies and a differential short at lower frequencies. The common mode circuit will present the capacitive and power management load at frequencies determined by the gate control circuit. Additional circuits may be used to implement specific functions in accordance with various embodiments of the present invention. One embodiment of a power feed circuit diagram is provided in FIG. 7. FIG. 7 contains a power feed circuit 120 located within non-magnetic transformer and choke power feed circuitry 62. The Ethernet network (network) power signal is received and complies with both alternative A and/or alternative B of 802.3af. Switching/rectifying circuit 122 receives the power signal from the RJ45 connector. The switching/rectifying circuit may receive the output of a surge protection circuit (not shown) or network connector 32, such as the RJ45 connector and rectify or switch the power signal to ensure a power signal with a proper polarity is applied to power feed circuit 120 of a PD. Protection and switching/rectifying circuits may not be required in a back plane application where the polarity of the power signal is known. Switching/rectifying circuit 122 may take the form of a diode bridge or network of switches (i.e. transistors) that may be located within an IC or discrete components. The power signal is provided at nodes L1N and L1P on the receive side and on the transmit side L2N and L2P of the power feed circuit as shown in FIG. 7. The Ethernet power signals pass through differential transistor pairs. The differential transistor pairs are shown as pairs M1 and M2 as well as M3 and M4. Individual Ethernet power signals pass through differential transistor pairs M1 or M2 on the receive side and M3 and M4 on the transmit side. The transistors shown may be MOSFET transistors, bipolar transistors, or other like transistors known to those having skill in the art. The power signal then will pass through a sense impedance such as resistor R1 and R2 on the receive side or R3 and R4 on the transmit side. Although the sense impedance is shown as a purely resistive impedance, this impedance may be a resistor and inductor in parallel or series or other like complex impedances known to those having skilled in the art. At the base of the sense impedance are the two output nodes of the circuit V_{DD} and Ground. Additionally, adaptive charging circuit 121 and capacitors C and C1A may be located between the two output nodes. The power converter will receive the power feed from these two nodes in order to power the network attached device.

Active control circuits 125 and 126 may be employed to ensure that the power signals passed through the transistors are of equal magnitude or balanced based on other criteria. Active control circuits 125 and 126 are operable to provide common mode suppression, insertion loss control, and current balancing by controlling the gate by control signals 105, 106, 111 and 112 which are applied to the gates of differential transistors M1, M2, M3 and M4. Additionally, the active control circuits may provide temperature and load control, or other signal conditioning functions.

The active control circuit may receive inputs 107, 108, 109, and 110 from the sense impedances, inputs from common mode suppression circuits 123 and 124, inputs from L1P, L1N, L2N and L2P. Common mode suppression circuits may be placed between conductors 1, 2, 3 and 6 as shown to sample signals 101, 102, 103 and 104 upstream of RX PHY 128 and TX PHY 127. Additionally this circuitry shows for an Ethernet network connection the connection of conductors 1 and 2 to receive side PHY and conductors 3 and 6 on the transmit side PHY with DC locking capacitors that act to only pass the AC portion of the signal. Power feed portion of the circuit as well as the splitting circuitry as exemplified by the DC blocking capacitors and the diode bridge network may be implemented within an integrated circuit. At a minimum the power feed circuit may be implemented as a discreet integrated circuit. Wherein the discreet or several discreet integrated circuits may be utilized on a printed circuit board in order to realize a network interface as provided by the embodiments of the present invention.

In the instance where a conductor associated with one transistor becomes an open circuit, existing solutions may balance the current associated with each transistor by forcing the current in the unaffected transistor to zero. The active control circuits of embodiments of the present invention may sense the open circuit by sensing the currents associated with each transistor and then appropriately load the available transistors, without creating an overload condition, to ensure power to the PD remains available. Additional circuits may be used to implement specific functions in accordance with various embodiments of the present invention. These circuits may absorb power sent on differential cable pairs.

A specific circuit diagram is provided in FIG. 8 that describes a portion of the power feed circuit 120 in more detail. Power feed circuit 120 is located within non-magnetic transformer and choke power feed circuitry 62. The Ethernet (network) power signal is received and complies with both alternative A and alternative B of 802.3af as shown in the FIG. 7. Power signals having a proper polarity are applied to the portion of power feed circuit 120 shown here in FIG. 8. The power signal is provided at nodes L1N and L1P on the receive side and on the transmit side L2N and L2P of the power feed circuit 120. The Ethernet power signals pass through differential transistor pairs. In these diagrams the differential transistor pairs are shown as pairs M1 and M2 as well as M3 and M4. Individual Ethernet power signals pass through differential transistor pairs M1 or M2 on the receive side and M3 and M4 on the transmit side. The transistors shown are MOSFET transistors. However, other transistors, such as bipolar transistors or other like transistors known to those having skilled in the art may be used in place of the MOSFET transistors shown. The power signal then will pass through a sense impedance such as resistor R1 and R2 on the receive side or R3 and R4 on the transmit side. Although the sense impedance is shown as a purely resistive impedance, this impedance may be a resistor and inductor in parallel or series or other like complex impedances known to those having skilled in the art. At the base of the sense impedance are the two output nodes of the circuit V_{DD} and Ground. The power converter will receive the power feed from these two nodes in order to power the network attached device.

To ensure that the power signals passed by each transistor are of equal magnitude, amplifier A1 on the receive side and A2 on the transmit side each sense the voltage at the drain of each transistors of the differential transistor pair to which the amplifier is coupled. This voltage equates to the voltage dropped across the sense impedances R1 and R2 or R3 and R4 respectively. The amplifiers A1 and A2 are operable to amplify the difference in voltage between the two voltages and then apply a feedback signal to the gate of individual transistors M1. M2, M3 and M4. This feedback signal forces the Ethernet power signal passed by each transistor of a differential transistor pair to be equal. (i.e. the current of M1 and M2 (or M3 and M4) are equal.)

The power feed portion of circuit 120 as well as the splitting circuitry as exemplified by the DC blocking capacitors shown in FIG. 7 and the switching/rectifying and protection circuitry may be implemented within a single IC. At a minimum the portion of the power feed circuit 120 shown in FIG. 8 may be implemented as a discreet IC. Wherein the discreet or several discreet ICs may be utilized on a PCB in order to realize a network interface as provided by the embodiments of the present invention.

Other embodiment may include additional elements to further provide for dynamic insertion loss control. Minimizing insertion loss allows the delivered power to be maximized. This may be applied to 10/100/1000 megahertz Ethernet signaling, as well as signaling for other network protocols including 10000 megahertz or higher signaling protocols. In one embodiment, the transistors of the differential pair may have a control signal applied to the gate dynamically adjusted depending on what type of signal is present (i.e. 10/100/1000 megahertz or other higher frequency signaling protocols). This may be implemented such that the minimal drop is realized from the source to drain of that device as experienced for that particular mode of operation. The insertion loss may be based on the actual received data signal or by determining the type of signaling and applying a predetermined insertion loss for a given type of signal. Mode detection may be performed within the higher level network protocol to determine the type of signal received and associated predetermined insertion loss.

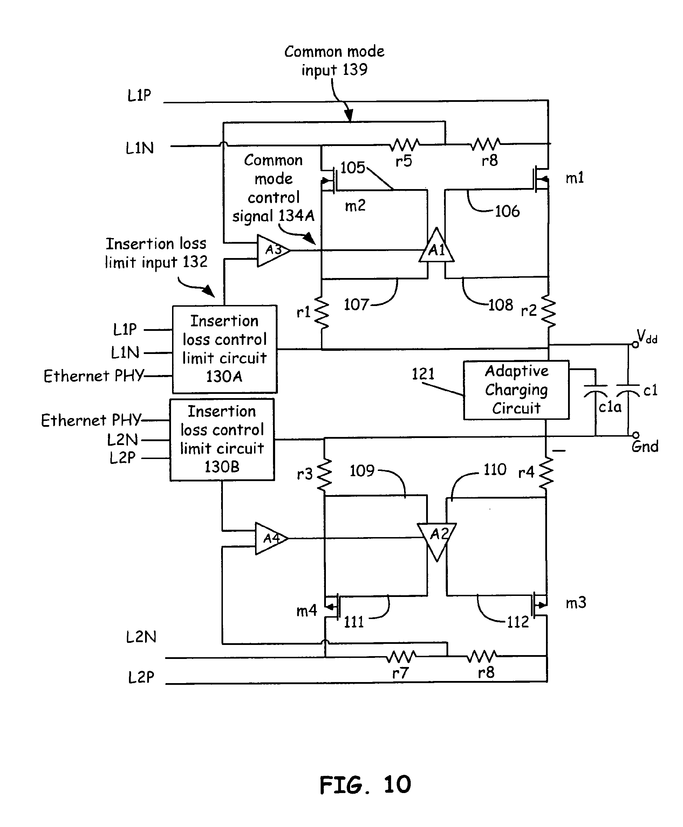

The embodiment of power feed circuit 120 shown in FIG. 8 includes an insertion loss control circuit 129. Insertion loss control circuit 129 may determine the insertion loss limit to be provided based on a differential RMS or peak detection of the received Ethernet power signals as seen by a differential transistor pair. Alternatively, this may be done using the common mode suppression circuit 124 to provide an input to the insertion loss control circuit 129. This input to the insertion loss control circuit is based on sensing the differential RMS or peak voltage seen at L1P and L1N or from twisted pairs 1, 2 and 3, 6. Insertion loss control circuit 129 receives both the insertion loss limit determined from sampling the twisted pairs, nodes L1N, L1P, L2N, and L2P, or from a voltage determined by the Ethernet PHY and fed into insertion control circuit via a connection to PHY 36. These inputs are used to produce a desired common-mode voltage input (insertion loss limit input 132 of FIG. 9) to amplifier A3 of FIG. 10. Amplifier A3 compares the measured common mode input 139 sampled between common mode resistors r1 and r2 with the desired common mode voltage supplied by insertion loss control circuit 129 and adjusts the feedback loop such that they are equal by supplying common mode control signal 134A to amplifier A1 (signal 134B to amplifier A2).

To minimize insertion loss and ensure that the power signals are of equal magnitude amplifier A1 on the receive side and A2 on the transmit side each receive a common mode feedback signal and sense the drain voltages of each transistors of the differential transistor pair, and then produces a control signal which may be applied to the gates of the differential transistors in order to force the power signals passed by the transistors to be equal.

Minimizing insertion loss allows the delivered power to be maximized. This may be applied to 10/100/1000 megahertz Ethernet signaling, as well as 10000 megahertz or higher signaling for other network protocols. In one embodiment, the transistors of the differential pair may have a control signal applied to the gate dynamically adjusted depending on what type of signal is present (i.e. 10/100/1000 megahertz or other higher frequency signaling protocols). This may be implemented such that the minimal drop is realized from the source to drain of that device as experienced for that particular mode of operation. The insertion loss limit may be based on the actual received data signal or by determining the type of signaling and applying a predetermined insertion loss for a given type of signal. Mode detection may be performed within the higher level network protocol to determine the type of signal received and associated predetermined insertion loss. The input to amplifier A1 from the amplifier A3 determines the common mode output of amplifier A1.

FIG. 9 provides a functional block diagram of one embodiment of a dynamic insertion loss control circuit for a 10/100/1000 megahertz Ethernet PD. These concepts may be applied to 10000 megahertz or higher signaling for other network protocols. Insertion loss control limit circuit 130 includes a differential to single ended amplifier 133, a rectifier 135, and a loop filter 137. Amplifier 133 receives a pair of network signals from nodes L1P and L1N or the twisted pairs within the RJ45 cable and converts the network signal into a single ended estimate 131. Rectifier 135 converts the signal into a power estimate that loop filter 137 uses to produce a common-mode control signal 134. Multiplexer (MUX) 136 can be selected to either pass the power estimate from the loop filter 137 or a voltage determined by the Ethernet PHY (insertion loss limit input 132) to the common mode amplifier A3 of in FIG. 10). Amplifier A3 will drive the common mode level of the power transistors (M1, M2, M3 and M4) to be equal to the rms signal power level. This will ensure that the power feed circuit has the minimal insertion loss to ensure proper functionality. This common mode feedback amplifier provides common mode suppression across a wide bandwidth and can implement the equivalent function to an EMI choke filter.

FIG. 10 illustrates one embodiment of a power feed circuit in accordance with an embodiment of the present invention where insertion loss control limit circuit 130 and associated amplifiers are used to provide both a common mode feedback signal and a differential feedback signal which is then applied to the gates of the transistors M1, M2, M3, and M4 of the differential transistor pairs. This circuit is similar to the circuits provided and discussed in FIGs. 7 and 8. However the active control circuits and insertion loss control circuit are presented in further detail. Here insertion loss control limit circuit 130 receives inputs either from twisted pair 1, 2 or L1P L1N nodes on the receive side and L2P L2N or twisted pairs 3, 6 on the transmit side. Additionally insertion loss control circuit limit 130 may receive an input from Ethernet PHY 36 to determine an insertion loss limit input 132. This insertion loss control limit is compared to the common mode signal 139 sampled between resistors R5 and R8. Amplifier A3 then is operable to produce a common mode control signal 134 which is then supplied to amplifier A1.

Amplifier A1 sensing the differential voltage at the drains of transistors M1 M2 as well as the common mode control signal 134 is able to generate appropriate control signals 105 and 106 which may then be applied to the gates of transistors M1 and M2. Thus the circuit is able to reduce, minimize, or control insertion losses as well as balancing the power signals seen on each of the individual transistors within a differential transistor pair. Additionally, the circuit may balance, or actively control, the current (load) passed by a first differential transistor pair with that passed by a second differential pair. The transmit side works similarly where A4 performs the functions that were previously described with reference to amplifier A3.

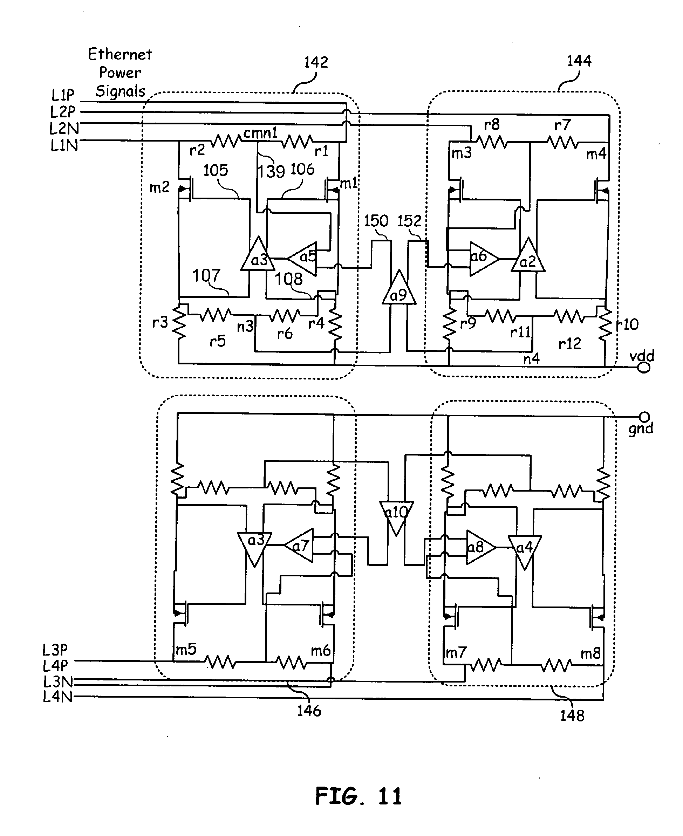

FIG. 11 is a schematic diagram that illustrates a power feed circuit 120 operable to support the power distribution scheme, "PoE plus." PoE plus is a power distribution scheme that has the ability to provide more power by providing power over all four twisted pairs as opposed to only two twisted pairs of alternative A or alternative B of 802.3af. Power signals are received from a switching/rectifying circuit if the polarity of the incoming power signals is unknown. These power signal are then distributed to four differential transistor power circuits 142, 144, 146 and 148. As each of these circuits operates in a similar manner, the operation of differential transistor power circuit 142 will be discussed in detail. Rectified power signals are received at nodes L1N and L1P on the receive side. The received Ethernet power signals pass through differential transistor pair M1 and M2. The power signal then will pass through sense impedance R3 and R4. Although impedances are shown as being purely resistive, these impedances may be a resistor and inductor in parallel or series or other like complex impedances known to those having skilled in the art. At the base of the sense impedance is output node V_{DD}. To ensure that the rectified power signals passed within differential transistor pair (i.e. transistors M1 and M2) are of equal magnitude amplifier A3 senses the voltage at the drain of transistors M1 and M2 to produce a differential component of the feedback signals 105 and 106 which are applied by amplifier A3 to the gates of transistors M1 and M2. To ensure that the rectified power signals passed within differential transistor power circuits 142 and 144 are of equal magnitude amplifier A9 senses and compares the voltages at node N3 between impedances R5 and R6 of circuit 142 and node N4 between impedances R11 and R12 of circuit 144. Inequalities between these voltages will indicate an imbalance in the power passed by circuit 142 as compared to the power passed by circuit 144. Outputs 150 and 152 of amplifier A9 is provided to amplifier A5 which also receives a common mode input 139 as measured between impedances R1 and R2. The common mode input 139 may not necessarily be required to balance power feed circuits 142 and 144. However, this common mode input allows the insertion losses to be minimized as discussed previously.

Amplifier A5 forces the common mode, or insertion loss of between cmn1 and V_{DD} to be equal to the voltage of n1. Amplifier A3 then applies individual control signals (i.e. 105 and 106) to the gates of transistors M1 and M2 in order to equalize power feed through the differential transistors within the pair and within the receive side of the power feed circuit (i.e. circuits 142 and 144). Differential transistor power circuits 146 and 148 function in a similar manner to balance the power fed through the individual transistors of the differential transistor pairs and the transmit side of the power feed circuit. Although not shown, splitting circuitry may separate the communication signal from the power signal and then relay this portion to a coupled Ethernet PHY.

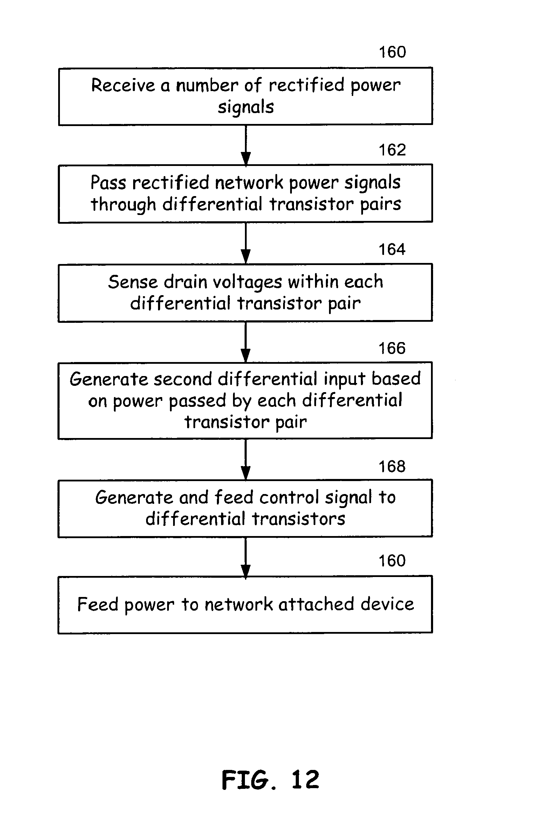

FIG. 12 provides a logic flow diagram that illustrates processing associated with at least partially powering a network attached device such as an Ethernet device from an Ethernet or network power signal fed through a network or Ethernet connection. This method involves at Step 160 receiving a number of paired rectified network power signals. To support POE plus, a pair of rectified network power signals is received on the receive side and a pair of rectified network power signals is received on the transmit side. In Step 162, the rectified power signals are passed through differential impedances to provide a first differential input (i.e. the drain voltages within a differential transistor pair as sensed in Step 164). Additionally a second differential input is produced in Step 166 by comparing the average power passed by the rectified power signal of each differential transistor pair. This correlates to comparing the average differential drain voltage between differential transistor pairs within It is important to realize that this common mode feedback amplifier provides common mode suppression across a wide bandwidth and can implement the equivalent function to a EMI choke filter.

The first and second differential inputs are combined in Step 168 to produce and feed a control signal to the gates of individual transistors. These control signals may be unique to each differential transistor. The Ethernet power signal may then be passed from a pair of output nodes in Step 160 in order to feed power to an Ethernet or network attached device.

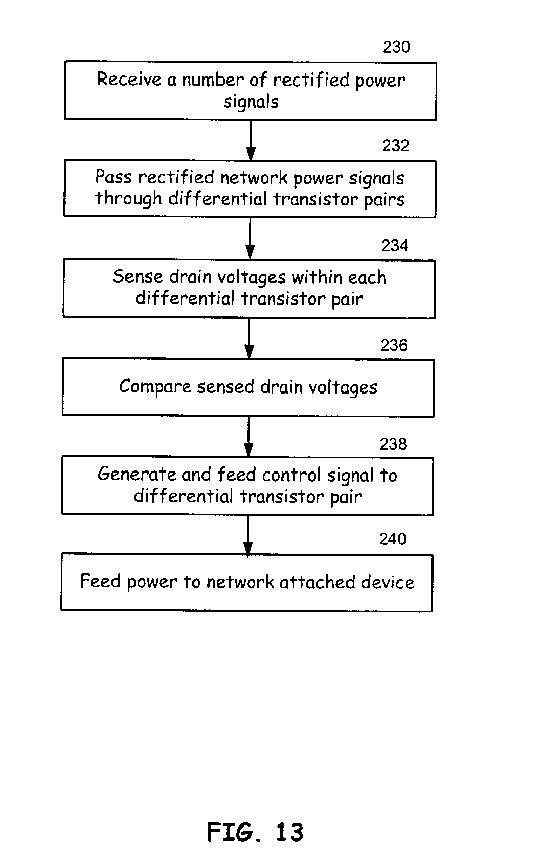

FIG. 13 provides a logic flow diagram that illustrates processing associated with at least partially powering a network-attached device such as an Ethernet device from an Ethernet or network power signal fed through a network or Ethernet connection. This method involves at Step 230 receiving a number of paired network power signals. In Step 232 each pair of network power signals is passed through differential transistor pairs. Depending on the source of the power, rectification may be required. The drain voltage at the drain of each transistor is sensed in Step 234. These drain voltages within each differential transistor pair are then compared in Step 136. This comparison results in a pair of control signals unique to each differential transistor based on the comparison of the drain voltages of each differential transistor pair. This control signal is applied in Step 238 to the gate of each transistor wherein the control signal forces the Ethernet power signal passed by each transistor to be equal within that differential transistor pair. The Ethernet power signal may then be passed from a pair of output nodes in order to feed power to an Ethernet or network attached device in Step 240.

Specific circuit applications for a portion of the non-magnetic transformer and choke power circuit 46 may utilize source degenerated differential pair of transistors wherein the well is floated relative to the substrate of the silicon devices. This allows the differential high impedance and the common mode short.

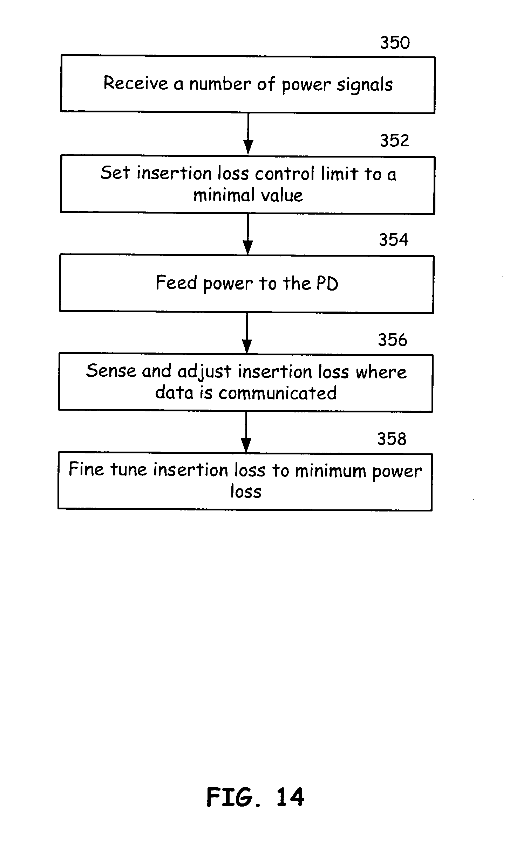

FIG. 14 provides a logic flow diagram that illustrates processing associated with at least partially powering a network-attached device such as an Ethernet device from an Ethernet or network power signal fed through a network or Ethernet connection. This method involves at Step 350 receiving a number of paired network power signals. In Step 352 an insertion loss limit is set initially to a minimum value. This minimum value may be associated with alternative B of 802.3af where power is fed on conductors without communication signals. Power is initially fed to the PD in step 354. Step 356 involves sensing and adjusting the insertion loss where data is communicated on conductors with power. The actual insertion loss limit associated with the may be determined for the received signals based on a differential RMS of the received Ethernet power signals as seen by a differential transistor pair. When the insertion loss limit is determined based on the differential RMS, the insertion loss control circuit is operable to automatically reduce the insertion loss based upon transmission losses experienced over the network connection between the power sending equipment and network-attached device. Alternatively, the insertion loss limit may be determined logically by the higher layers of the network protocol based on the AC differential portion of the network power signal. In yet another embodiment, current through the differential transistors as measured by the voltage at the drain of the differential transistors, or the differential signal swing as measured by the voltage within a resistor bridge across the transistor drains wherein this and supplied to the insertion loss control circuit. The average power of the power signals is sensed and combined with the insertion loss limit to produce a common mode feedback signal in step 356 that tunes the insertion loss to minimize or reduce the insertion loss.

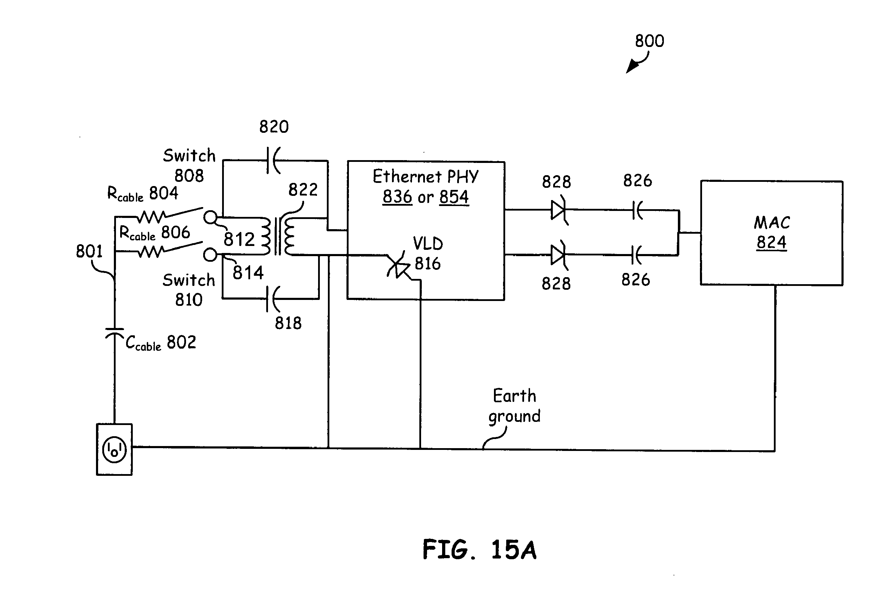

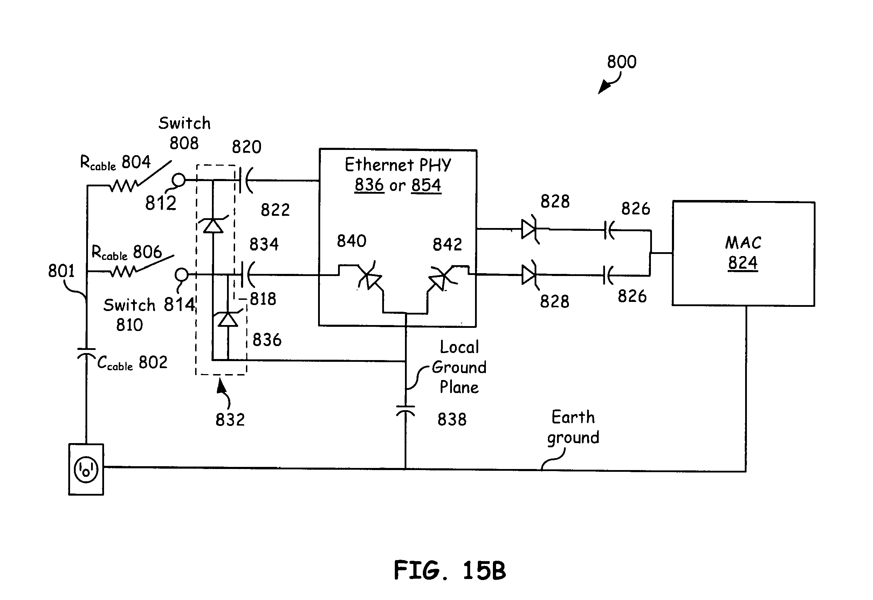

Additional circuits may be used to implement specific functions in accordance with various embodiments of the present invention. Various embodiment of ESD protection circuits within a PoE device are provided in FIGs. 15A-15B. Known solutions typically clamp the IC ground plane to the earth ground. This may force a cable discharge or ESD current to flow primarily through low impedance, sensitive analog input circuits which are vulnerable to destruction via an ESD or cable discharge event. Embodiments of the present invention float the local ground plane as shown in FIG. 15B in order to force destructive ESD currents to flow through circuits that are ruggedized to handle ESD events.

In the embodiment of an ESD protection circuit depicted in FIG. 15A, the circuit includes a cable 801 having a capacitance represented by capacitor (C_{cap}) 802 and an impedance represented by resistors (R_{cable}) 804 and 806. Switches 808 and 810 couple to transformer terminals 812 and 814. The instantaneous current seen within the PoE device is determined by the effective impedance of the ESD voltage limiting device (VLD) 816 in combination with the cable impedance. The time constant of the current decay is determined by the combination of the capacitance of cable 801 and transformer 822, wherein capacitors 818 and 820 may represent the interwinding capacitance of transformer 822. Additionally, the IC, depicted here as the Ethernet PHY 36 or 54 may receive ESD protection from other coupled circuits, such as MAC 824 with capacitance 826 and impedance 828 as shown.

FIG. 15B provides a modified circuit 830 operable to provide improved ESD performance to an IC in accordance with an embodiment of the present invention. This circuit adds a T_{connect} circuit 832 across the inputs of a circuit sensitive to ESD events, such as an Ethernet PHY module within the IC. T_{connect} circuit 832 is operable to function as a direct shunt in the event of an ESD event. T_{connect} circuit 832 includes voltage limiting devices 834 and 836. These voltage limiting devices may be a Zener diode, resistor, complex impedance or other like device. T_{connect} circuit 832 allows parasitic capacitance 838 to float the ground of the Ethernet PHY which reduces the instantaneous voltage across the Ethernet PHY. T_{connect} circuit 832 also minimizes the instantaneous current across the Ethernet PHY by shunting current around the Ethernet PHY. Hence, the total energy dissipated within a sensitive circuit such as Ethernet PHY 36 or 54, is reduced. This reduction helps to prevent potential damage to the sensitive circuitry of the Ethernet PHY. Thus the overall ESD performance of the IC improves.

Shunting of the external current, such as those caused by an ESD, forces the local ground plane to rise with respect to the earth ground 834 by charging parasitic capacitance 838. By quickly charging capacitance 838, the ESD current within and ESD voltage across Ethernet PHY 36 or 54 is greatly reduced. The ESD event may then be dissipated through an ESD discharge path provided through Voltage limiting device 842, resistor 828, capacitor 826, and a R_{esd} contained within MAC 824. This discharge path may be a high impedance path operable to dissipate energy over time following an ESD event.

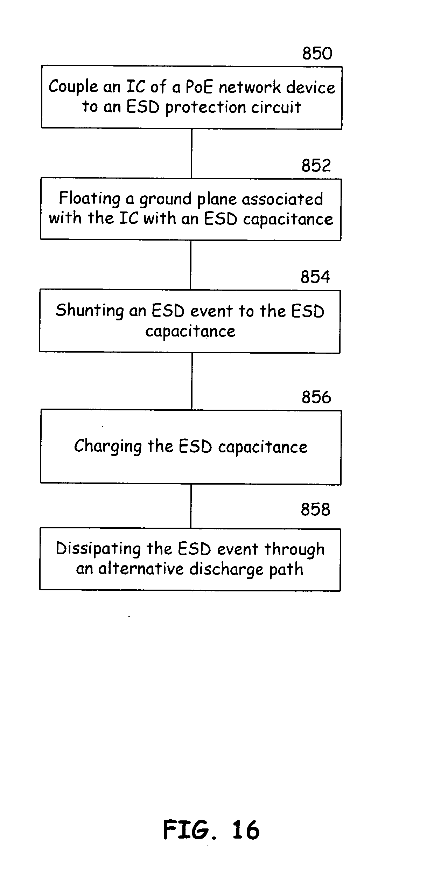

FIG. 16 provides a logic flow diagram depicting an improved method to protect an IC of a POE network device in accordance with an embodiment of the present invention. In Step 850, an IC of a PoE network device may be coupled to an ESD protection circuit. The ESD protection circuit may include an ESD parasitic capacitance with which the ground plane associated with the IC may be floated in Step 852. Should an ESD event occur, the ESD current may be shunted through an ESD parasitic impedance path placed in parallel with the IC in order to rapidly charge the ESD parasitic capacitance. By rapidly charging the ESD parasitic capacitance in Step 856, the ground of the IC floats and the voltage potential across (and instantaneous current within) the IC is rapidly reduced and limits the energy dissipated within the IC. Then, the energy associated with the ESD event may be dissipated through an alternative discharge path in Step 858. Dissipating this energy through an alternative path and rapidly reducing the voltage potential seen within the IC may reduce significantly the energy dissipated within the IC. By reducing the energy dissipated within the IC, it is possible to prevent damage to vulnerable circuits within the IC.

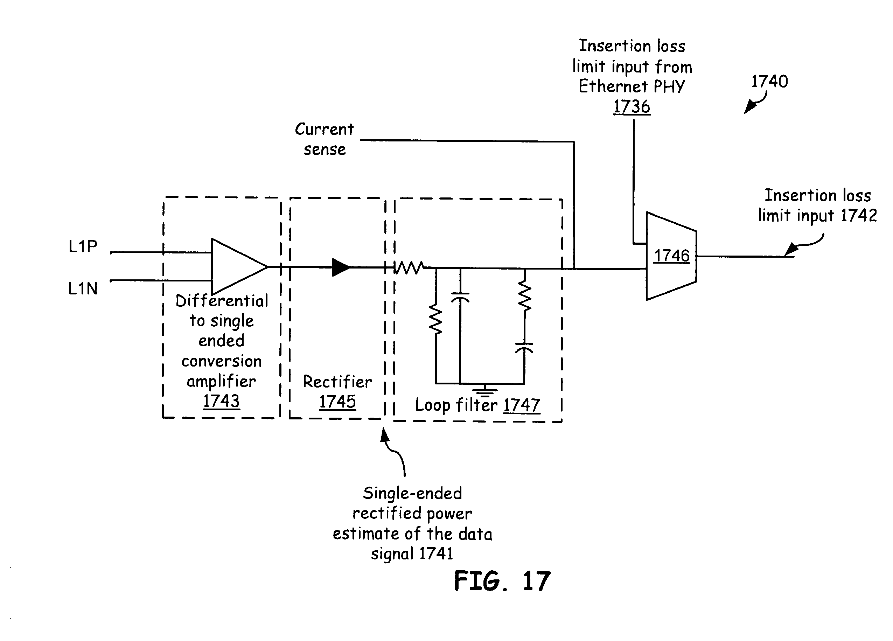

FIG. 17 provides a functional block diagram of one embodiment of a dynamic insertion loss control limit circuit for a 10/100/1000 megahertz Ethernet PD. These concepts may be applied to 10000 megahertz or higher signaling for other network protocols. Insertion loss control limit circuit 1740 includes a differential to single ended amplifier 1743, a rectifier 1745, and a loop filter 1747. Amplifier 1743 receives a pair of network signals from nodes L1P and L1N and converts the network signal into a single ended estimate 1741. Rectifier 1745 converts the signal into a power estimate that loop filter 1747 uses to produce a common-mode control signal 1744. Multiplexer (MUX) 1746 can be selected to either pass the power estimate from the loop filter 1747 or a voltage determined by the Ethernet PHY (insertion loss limit input 1742) to active control circuits as a feedback signal. This feedback signal allows the active control circuits of FIG. 7 to limit the power drawn by power transistors (M1, M2, M3 and M4). This will ensure that the power feed circuit can provide the maximum power based on the data signal.

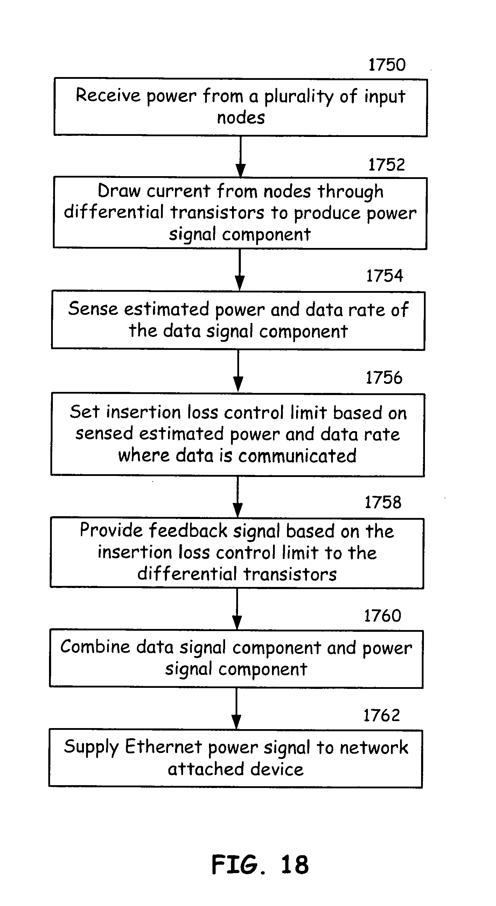

FIG. 18 provides a logic flow diagram associated with one embodiment of the present invention. In step 1750, power is received from a plurality of input nodes. This may involve physically coupling the input nodes of the power feed circuit within a PSE network device to a power supply. Step 1752 may then draw currents from the input nodes through differential transistors in order to produce a power signal component. This power signal component may later combine with a data signal component. Step 1754 senses an estimated power and data rate associated with the data signal component. The insertion loss control limit may then be determined based on the sensed estimated power and data rate where data is communicated in step 1756. The feedback signal produced in step 1758 is based on the insertion loss control limit and may be applied to the differential transistors. This feedback signal may limit the power supplied or current drawn through the differential transistor in order to limit the power associated with the power signal component. Step 1760 combines the data signal component and power signal component in order to produce the Ethernet power signal. Step 1762 then supplies the Ethernet power signal to network attached devices. These feedback signals produced in step 1758 may involve individual control signals for each transistor within differential transistor pairs. These control signals may be applied to the gate of each transistor in order to affect the current drawn by the individual transistors which when aggregated affects the overall power signal component.

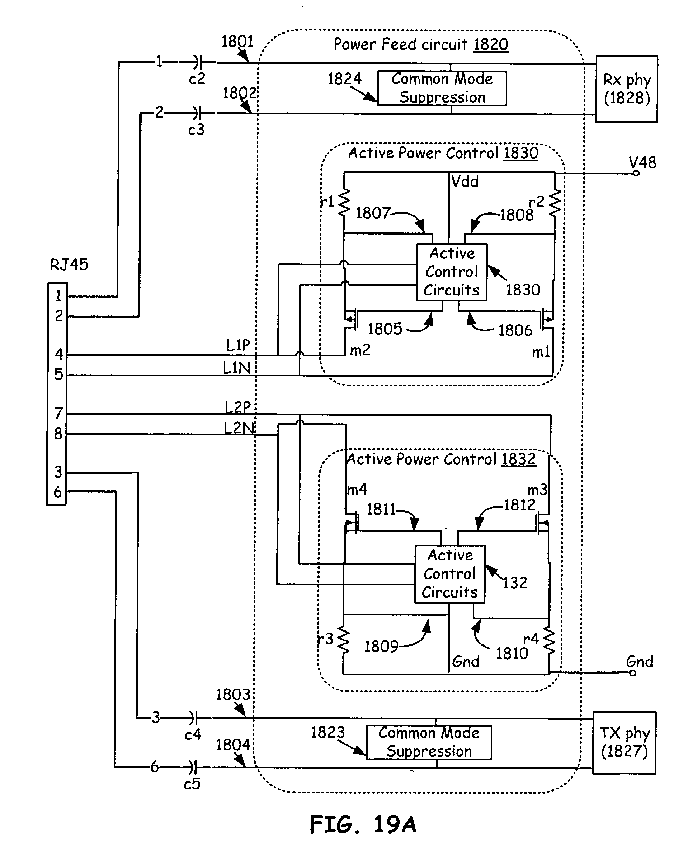

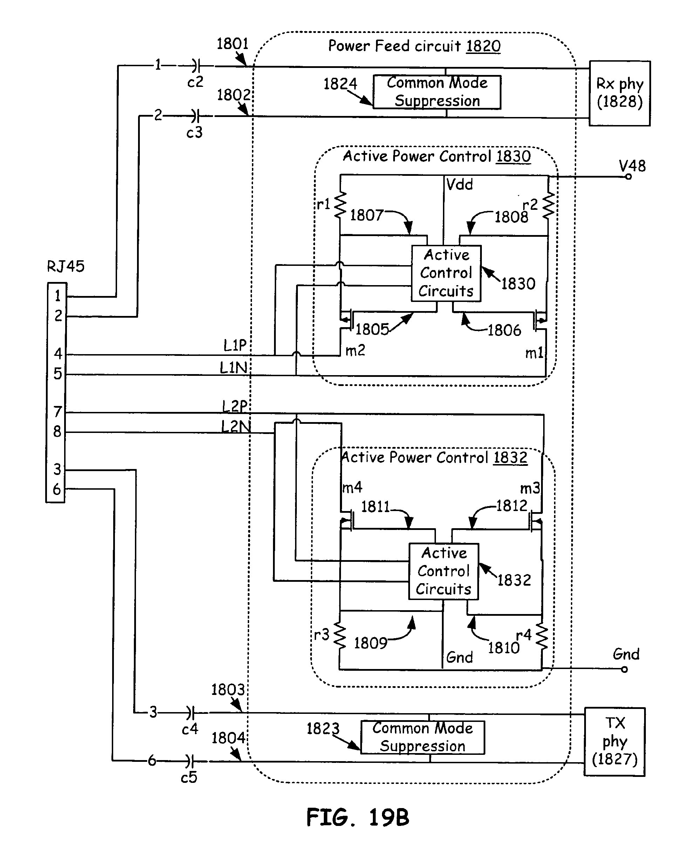

Various embodiment of power feed circuits within a PSE are provided in FIGs. 19A-19B. FIG. 19A contains a power feed circuit 1820 located within non-magnetic transformer and choke power feed circuitry 66 of FIG. 5B. The Ethernet network (network) power signal produced complies with alternative A. FIG. 19B depicts a power feed circuit located within non-magnetic transformer and choke power feed circuitry 66 that produces a power signal that complies with alternative B. Other embodiments are possible and will be discussed with reference to FIGs. 9A-9E wherein the various embodiments may comply with alternative A and/or alternative B of 802.3af as well as the "PoE plus" standard for higher power applications. The resultant Ethernet signal may be provided via a network connector 32, such as the RJ45 connector.

Power is supplied to differential transistor pairs within the non-magnetic transformer and choke power feed circuitry 66 from power supply 97. Power supply 97 may couple to the 48 volt node and ground node within power feed circuit 1820 of FIG. 19A and 19B. Active control circuits 1825 and 1826 may sense the source voltage at the individual transistors via circuit pathways 1807 and 1808. Additionally, active control circuits 1825 and 1826 may sense the drain voltage along line from nodes L1P, L1N, L2P and L2N. This allows the active control circuit 1825 and 1826 to generate control signals 1805, 1806, 1811 and 1812 which are applied to the gates of the transistors. For example, control signals 1805 and 1806 may be applied to the gates of differential transistors M2 and M1 respectively. By sensing these voltages, the active control circuits may balance the power supplied by any individual transistor. Comparing the differential voltage seen as the source of transistors M1 and M2, shown as signals 1807 and 1808 respectively allows active control circuit 1825 to adjust the gate currents 1805 and 1806 to balance the current passed by transistors M1 and M2. In other instances, should an open circuit condition result or a failure of an individual transistor or pathway occur, the active control circuits may allow the remaining transistor and circuit elements to pass a reduced power signal without overloading the remaining circuit elements. Previous solutions would have resulted in an overload condition or power delivery shutdown.

Individual power signals are provided on L1P, L1N, L2P, L2N and may combine with data signals supplied on lines 1801, 1802, 1803 and 1804 by PHY 1828 and 1827. The combined Ethernet signal that contains both data and power is provided over twisted pairs (1, 2) and (3, 6) of the RJ-45 connector in accordance with Alternative A on 802.3af standard.

The power signal is provided at the input nodes V48 and Gnd of active power control modules 1830 and 1832. L1N and L1P on the receive side and on the transmit side L2N and L2P of the power feed circuit provide the power signal to the network connector. The differential transistor pairs are shown as pairs M1 and M2 in active power control module 1830 and as M3 and M4 in active power control module 1832. Individual Ethernet power signals pass through differential transistor pairs M1 or M2 on the receive side and M3 and M4 on the transmit side. The transistors shown may be MOSFET transistors, bipolar transistors, or other like transistors known to those having skill in the art. The power signal received from the power supply input nodes pass through sense impedance such as resistor R1 and R2 on the receive side or R3 and R4 on the transmit side. The voltage drop across these impedances is used as an input to the active control circuits to balance these circuits.

Active control circuits 1825 and 1826 may ensure that the power signals passed through the transistors are of equal magnitude or balanced based on other criteria. Active control circuits 1825 and 1826 are operable to provide common mode suppression, insertion loss control, and current balancing by controlling the gate by control signals 1805, 1806, 1811 and 1812 which are applied to the gates of differential transistors M1, M2, M3 and M4. Additionally, the active control circuits may provide temperature and load control, or other signal conditioning functions.

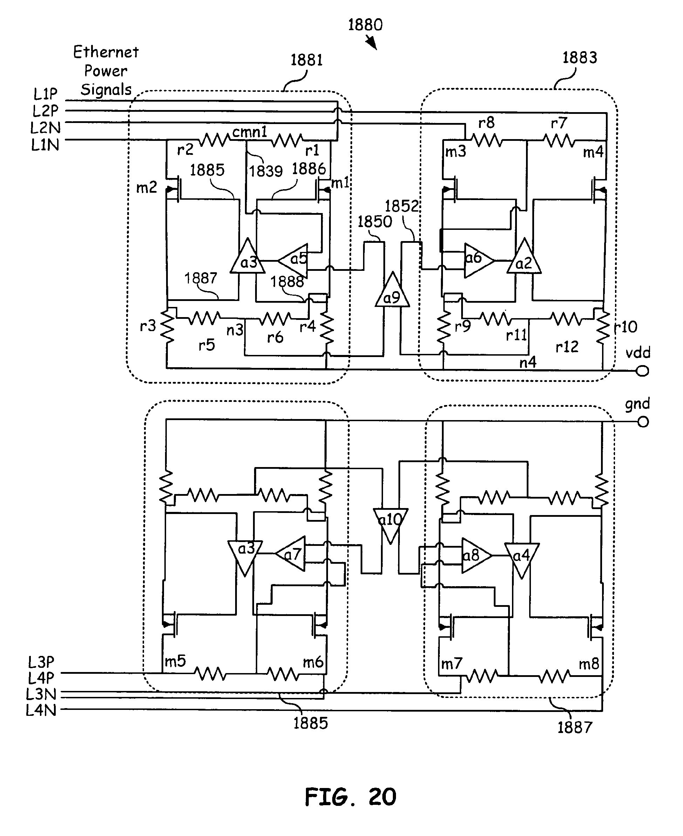

FIG. 20 is a schematic diagram that illustrates a power feed circuit 1880 operable to support the power distribution scheme, PoE plus. Power is supplied to differential transistor pairs within the non-magnetic transformer and choke power feed circuitry from an isolated power supply coupled to the 48 volt node (Vdd) and ground node (gnd). These power signals are then distributed to four differential transistor power circuits 1881, 1883, 1885 and 1887. As each of these circuits operates in a similar manner, the operation of differential transistor power circuit 1881 will be discussed in detail. Power signals (i.e. currents) are drawn through resistors r3 and r4. The currents drawn then pass through differential transistor pair M1 and M2. Although impedances are shown as being purely resistive, these impedances may be a resistor and inductor in parallel or series or other like complex impedances known to those having skilled in the art. To ensure that the currents drawn through the differential transistor pair (i.e. transistors M1 and M2) are of equal magnitude amplifier A3 may sense the voltage at the source or drain of transistors M1 and M2 to produce a differential component of the feedback signals 1885 and 1886 which are applied by amplifier A3 to the gates of transistors M1 and M2. To ensure that the rectified power signals passed within differential transistor power circuits 1881 and 1883 are of equal magnitude amplifier A9 senses and compares the voltages at node N3 between impedances R5 and R6 of circuit 1881 and node N4 between impedances R11 and R12 of circuit 1883. Inequalities between these voltages will indicate an imbalance in the power passed by circuit 1881 as compared to the power passed by circuit 1883. Outputs 1850 and 1852 of amplifier A9 is provided to amplifier A5 which also receives input 1839 as measured between impedances R1 and R2. Amplifier A5 is included to provide a fixed DC offset between nodes cnnl and Vdd.

Amplifier A3 applies individual control signals (i.e. 1805 and 1806) to the gates of transistors M1 and M2 in order to equalize power feed through the differential transistors within the pair and within pairs. Although not shown, combining circuitry may combine the communication signal with the power signal and then relay this portion to a coupled Ethernet PHY.

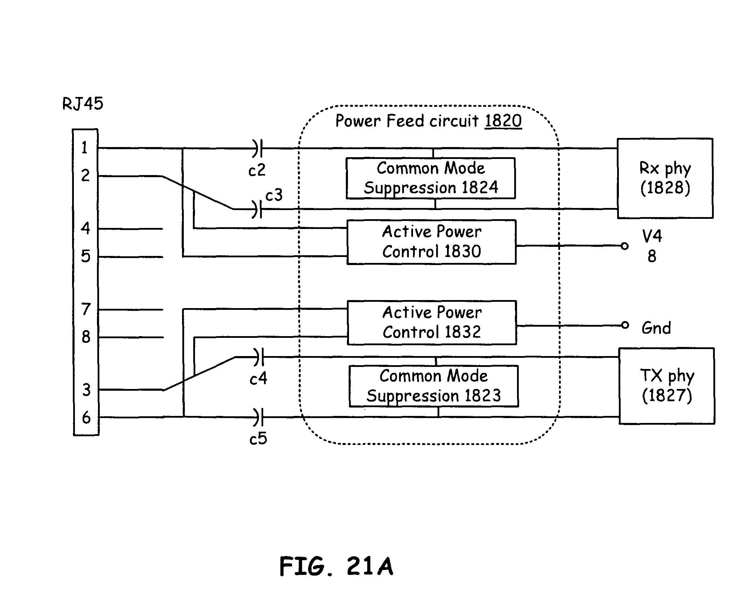

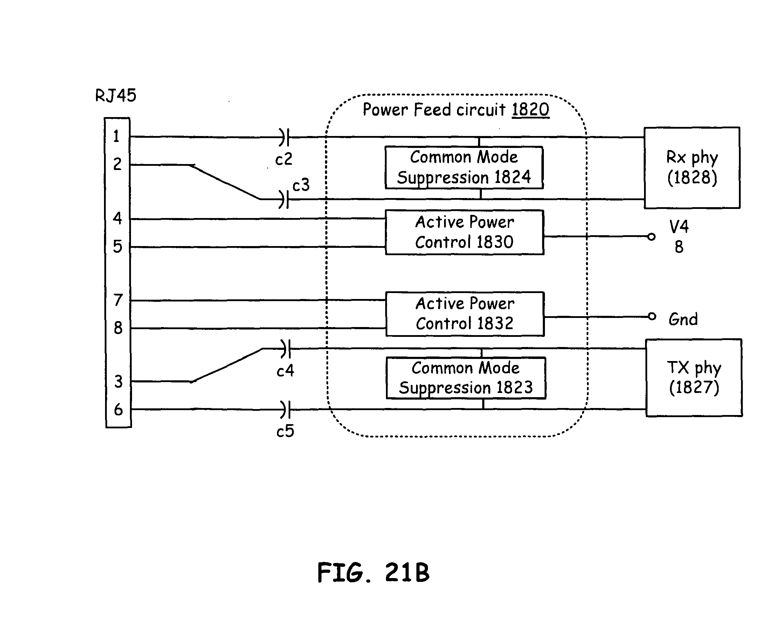

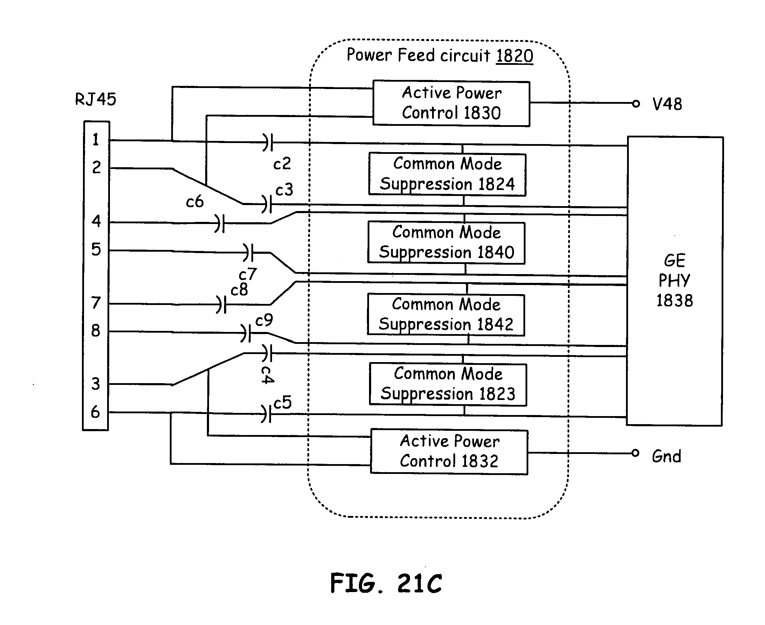

FIGs. 21A through 21E illustrate various configurations of common mode suppression and active power control circuits that are compliant with Alternative A, Alternative B, and/or a higher power PoE option (i.e. "PoE plus" operable to deliver power simultaneously over 4 twisted pairs), and that may support various data rates up to and including gigabyte Ethernet. FIG. 21A is a 2 twisted pair Alternative A embodiment operable to support 10/100M Ethernet signaling. FIG. 21A shows an embodiment where the upper power feed circuit 1820 utilizes a single pair of active power control circuits 1830 and 1832 that supply power over 2 twisted pairs (i.e. (1, 2) and (3, 6) where twisted pairs (4, 5) and (7, 8) are not used for power and/or data). Thus this first embodiment is compliant with alternative A. FIG. 21B is a 2 twisted pair Alternative B embodiment operable to support 10/100M Ethernet signaling. The second embodiment is complaint with Alternative B where Ethernet data signals are provided on twisted pairs (1, 2) and (3, 6) while power is provided on twisted pairs (4, 5) and (7, 8). Individual twisted pairs in this embodiment are used only to supply power or data but not both.

FIG. 21C is a 2 twisted pair Alternative A embodiment operable to support 10/100/1000 megahertz Ethernet signaling. FIG. 21C increases the data supply with a PHY 1838 operable support gigabyte Ethernet. In this instance twisted pairs (1, 2) are used to supply power and data from power supplied by active power control 1830. Similarly active power control 1832 provides power over twisted pair (3, 6). Additionally, in order to support increased data rates (i.e. gigabit Ethernet), twisted pairs (1, 2), (3, 6), (4, 5) and (7, 8) all are used to supply data as well. This involves the addition of common mode suppression circuits 1840 and 1842 and associated blocking capacitors C2 through C9 in order to supply Ethernet data.

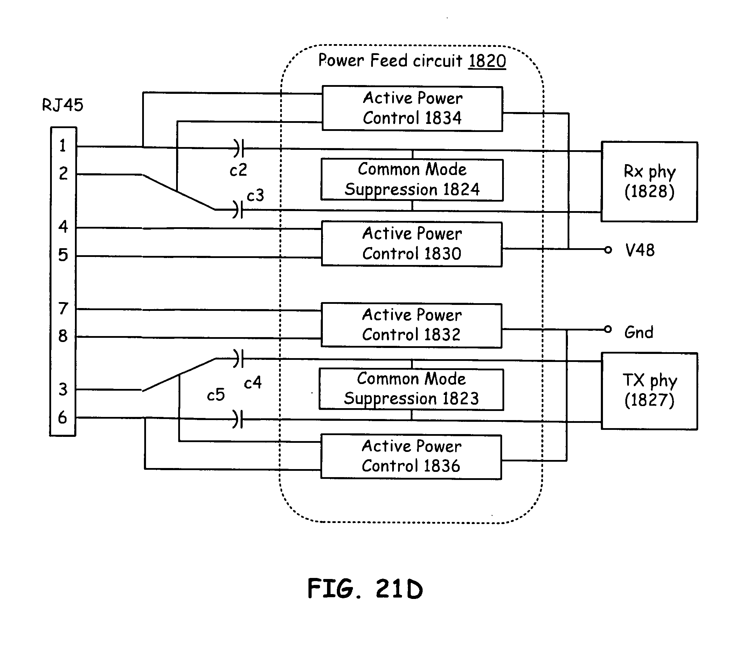

FIG. 21D is a 4 twisted pair operable to support 10/100M Ethernet signaling. In FIG. 21D the ability to deliver power over the Ethernet connection is increased by having the ability to deliver power with additional active power control modules circuits 1834 and 1836 over the twisted pairs (4, 5) and (7, 8). It should be noted that power only is provided over twisted pairs (4, 5) and (7, 8). This effectively allows the power supply under Alternative A or Alternative B to be doubled (i.e. PoE plus) by simultaneously delivering power on all 4 twisted pairs.

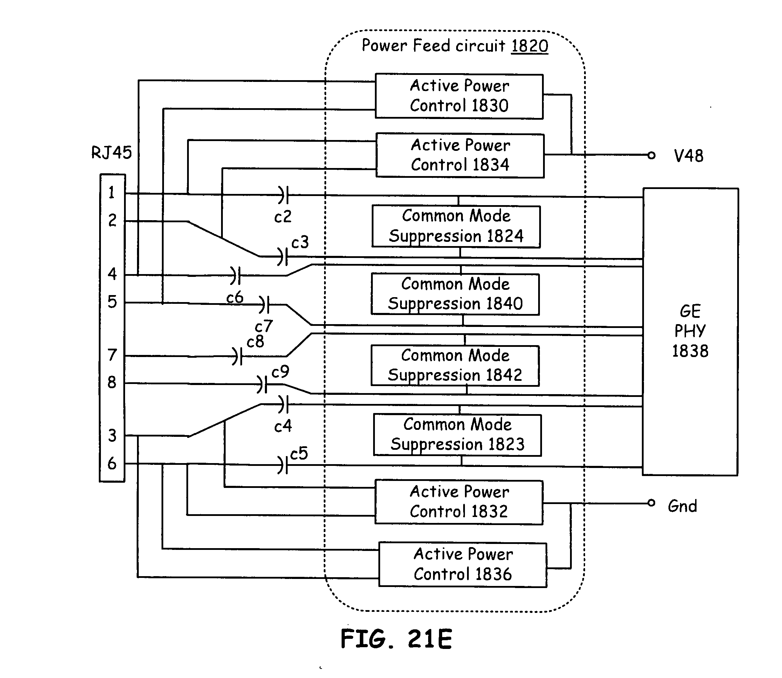

FIG. 21E is a 4 twisted pair operable to support 10/100/1000 megahertz Ethernet signaling. FIG. 21E increases both the ability to deliver power and data. This is achieved by supplying power and data on each Ethernet twisted pair. Active power control modules 1830, 1832, 1834 and 1836 supply power to twisted pairs (1, 2), (3, 6), (4, 5) and (7, 8) respectively. As shown in FIG. 8D, data is supplied via each twisted pair as previously discussed.

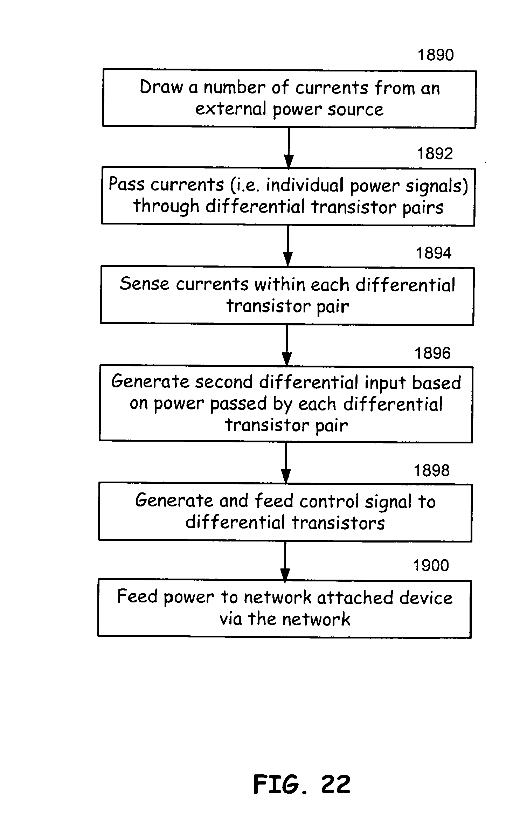

FIG. 22 provides a logic flow diagram that illustrates processing associated with at least partially powering a network attached device such as an Ethernet device from an Ethernet or network power signal fed through a network or Ethernet connection. This method involves at Step 1890 drawing a number of power signals or currents from at least one isolated power source. A first embodiment may draw power that is supplied on 2 twisted pairs to the network, while a second embodiment may draw power on 4 twisted pairs. The power supply has been previously illustrated as a single power supply 97 in FIG. 6B. However, the currents may be drawn from multiple power supplies. For example, the power associated with twisted pairs (1, 2) and (3, 6) may be drawn from a first power supply while power associated with twisted pairs (4, 5) and (7, 8) may be drawn from a second power supply. This would offer improved redundancy for PoE applications. The circuitry associated with embodiments of the present invention would still be able to balance the current drawn from the isolated power supplies. In the event of a failure of one power supply, the circuitry may adjust the currents of the remaining power supply accordingly to ensure power is provided by the PSE device.

In step 1892, the currents (i.e. individual power signals) are passed through differential impedances to provide a first differential input (i.e. the source or drain voltages within a differential transistor pair as sensed in step 1894). Additionally a second differential input results in step 1896 by comparing the average power passed by the power signal of each differential transistor pair. This correlates to comparing the average differential drain voltage between differential transistor pairs.

The first and second differential inputs may be combined in step 1898 to produce and feed a control signal to the gates of individual transistors. These control signals may be unique to each differential transistor. The Ethernet power signal may then be passed to the network in Step 1900 in order to feed power to an Ethernet or network attached device.

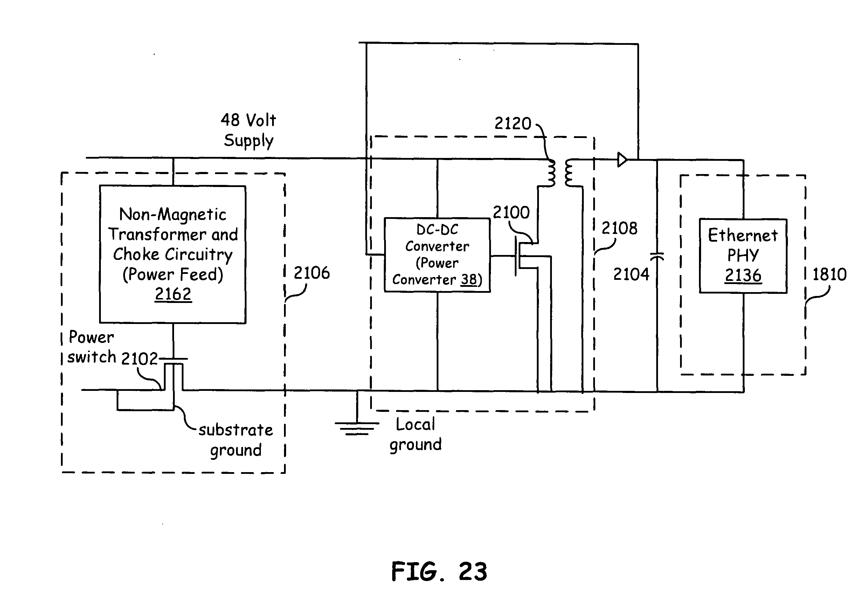

FIG. 23A depicts discrete IC components operable to support the distribution of power over the Ethernet. The ICs of FIG. 23A and 23B include power feed circuit 62, a DC/DC converter 38 and Ethernet PHY module 36. When power is disabled the local ground may float up to the supply voltage (i.e. 48 volt supply). This is not a problem when the Ethernet PHY 36, DC-DC power converter 38, and power feed circuit 62 are discrete IC components 2106, 2108, and 2110 respectively as shown in FIG. 23A. However, FIG. 23B depicts an instance where the Ethernet PHY 36, DC-DC power converter 38, and power feed circuit 62 are integrated into a single IC 2112 and thus share a single substrate 2114. High voltages across the fine line structures or other sensitive circuits (i.e. low voltage circuits) in such an instance can easily destroy the device.

The Ethernet PHY module, or other like circuits, may contain fine line structures which may be limited to a maximum voltage. For example, the fine line structures of the Ethernet PHY module may be limited to a 3-volt maximum. Thus, if the ground of the Ethernet PHY module were to float or latch up to the 48-volt supply voltage provided to the power feed circuit or DC-DC power converter, a significant risk would arise from the increased potential that may be placed on the Ethernet PHY module. This large voltage potential could potentially damage or destroy the fine line structures within the Ethernet PHY module or other like components that contain fine line structures.

FIG.23B provides an embodiment where PHY 36, DC-DC power converter 38, and power feed circuit 62 are integrated onto a single substrate. Thus, the Ethernet PHY module or other IC components containing fine line structures (i.e. low voltage circuits) may be isolated from the 48 volt power supply. In the instance in FIG. 23B, pulsed power switch 2100 is coupled to the local ground such that the Ethernet PHY module 36 cannot rise to the potential of the 48 volt rail voltage supplied to the DC to DC power converter and power feed circuit. Power switch 2102 prevents power feed circuit 62 from supplying power until an enable signal has been provided to the power feed circuit.

DC-DC power converter 38 receives a first DC signal, such as a 48-volt signal supplied by the 48-volt rail, and provides an output signal to pulse switch 2100 which will produce a second DC signal which may have a lower voltage such as a 3-volt maximum power signal to be applied to the Ethernet PHY module 36. When Ethernet PHY module 36 is connected to local ground as in Figure 23A, the ground plane of the Ethernet PHY module 36 can float towards the 48-volt signal provided to the DC-DC power converter. This can potentially damage the fine line structures within the Ethernet PHY. To prevent this, these components share a common substrate ground 2114 as shown in Figure 23B wherein the substrate ground is tied to local ground 2118 when power switch 2102 is enabled. This substrate ground may be coupled to an earth ground or a predefined potential. Additionally, power switch 2102 may limit the current passed by the primary side of transformer 2120. This current limit action also helps to limit the voltage seen on the secondary side of transformer 2120.

In addition to the components shown, the IC may further include a PSE controller, media processor, home plug manager, factory controller, multi-port switch, Ethernet switch module or other like components. Some of these components may also contain fine line structures and may require use of the common substrate ground to prevent damage to these sensitive circuits.

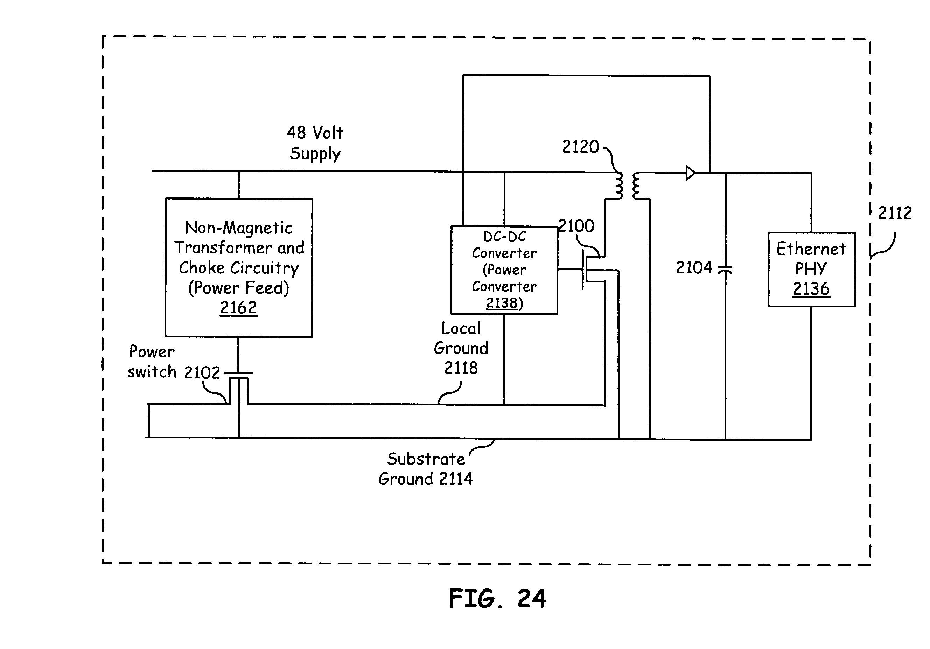

FIG. 24 provides an IC that addresses this potential hazard when seen in other ICs that incorporate both high and low voltage devices onto a single substrate. Here the fine line structures of a component within then IC, such as low voltage circuit 2146, are kept from being exposed to the large potential voltage of a higher voltage supply. IC 2140 of FIG. 24 includes high voltage circuit 2142, power converter 2144, low voltage circuit 2146, pulse power switch 2100 and power switch 2102. These components share a common substrate ground 2114 wherein the substrate ground is tied to local ground 2118 when power switch 2102 is enabled. As discussed in FIG. 23B, power switch 2102 of may limit the current passed by the primary side of transformer 2120. This current limit action also helps to limit the voltage seen on the secondary side of transformer 2120.

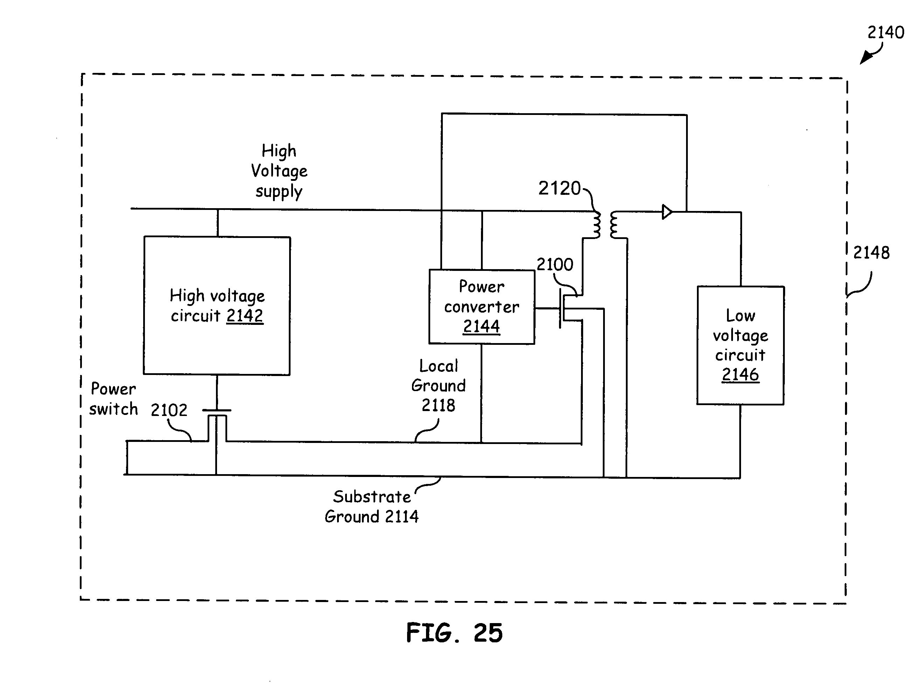

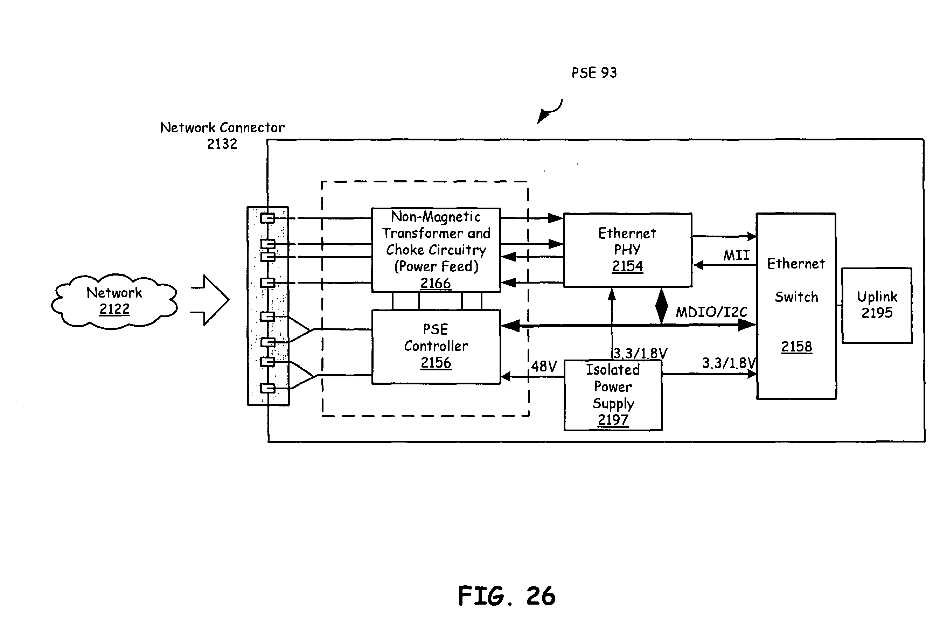

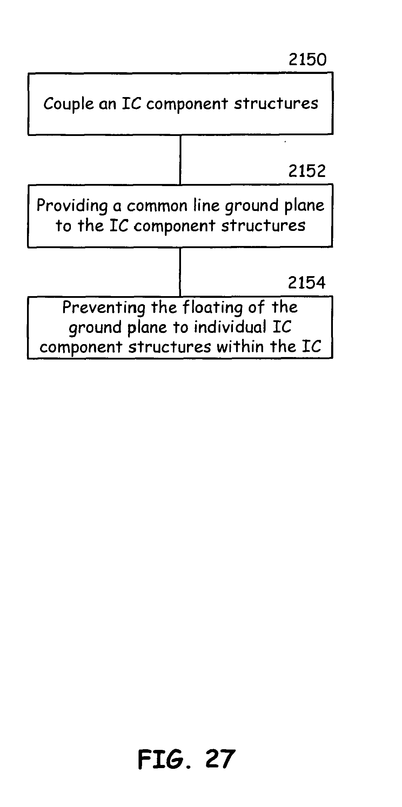

FIG. 25 provides a logic flow diagram in accordance with an embodiment of the present invention. In this logic flow diagram, ground protection is provided to individual components within an IC. In step 2150 IC component structures are coupled to one another as required in the IC design. Some of these IC component structures may include fine line structures which may be damaged when the voltage to which the fine line structures are exposed, exceeds a threshold such as 3 volts. Within highly ICs where different voltages are required problems in integrating these components can arise. For example, when the PoE IC includes a DC-DC power converter, this component may receive voltages that would damage other portions of the IC. The 48-volt signal could significantly damage fine line structures contained within other components. To address this situation, step 2152 provides a common substrate ground to the coupled IC component structures. This common substrate ground prevents the ground plane associated with any individual IC component coupled thereto from floating in step 2154.

As one of average skill in the art will appreciate, the term "substantially" or "approximately", as may be used herein, provides an industry-accepted tolerance to its corresponding term. Such an industry-accepted tolerance ranges from less than one percent to twenty percent and corresponds to, but is not limited to, component values, integrated circuit process variations, temperature variations, rise and fall times, and/or thermal noise. As one of average skill in the art will further appreciate, the term "operably coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. As one of average skill in the art will also appreciate, inferred coupling (i.e., where one element is coupled to another element by inference) includes direct and indirect coupling between two elements in the same manner as "operably coupled". As one of average skill in the art will further appreciate, the term "compares favorably", as may be used herein, indicates that a comparison between two or more elements, items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

Although embodiments of the present invention are described in detail, it should be understood that various changes, substitutions and alterations can be made hereto without departing from the spirit and scope of the invention.

## Claims

1. A power over Ethernet (PoE) device operable to exchange both a power signal and a data signal with a coupled Ethernet network, comprising:
an Ethernet network connector operable to physically couple the power over Ethernet network device to the Ethernet network, wherein the Ethernet network connector receives a plurality of twisted pairs;
an integrated circuit (IC) coupled to the Ethernet network connector that further comprises a power feed circuit, wherein the power feed circuit is operable to:
exchange the data signal with an Ethernet physical layer (PHY) module; and
pass the power signals as directed by a power management module.

2. A method to supply power from a first power over Ethernet (PoE) device to a second PoE device with an Ethernet power signal fed through an Ethernet network connection, comprising:
physically coupling the first PoE device to at least one isolated power supply, wherein an integrated circuit (IC) within the first PoE device produce the Ethernet power signal from a plurality of power signals supplied by the isolated power supply;
physically coupling the first PoE device to an Ethernet network;
combining with the IC, an Ethernet data signal and the Ethernet power signal to produce an Ethernet signal;
providing ground isolation for the Ethernet data signal and the Ethernet power signal; and
exchanging the Ethernet signal with the second PoE device physically coupled to the Ethernet network within the PSE network device.

3. The power over Ethernet network device of Claim 1, or method of Claim 2, wherein the PoEs further comprise:
a surge protection circuit, wherein the surge protection circuit interfaces to a diode bridge network; and
provide surge protection across a plurality of twisted pairs within the Ethernet network connector; and
a switching/rectifying circuit operable to:
accept a power signal from the plurality of twisted pairs; and
route the power signal to an appropriate node of the power feed circuit based on a polarity of the power signal.

4. The power over Ethernet network device of Claim 1, or method of Claim 2, wherein the IC further comprises at least one circuit selected from the group consisting of:
a switching/rectifying circuit;
the power management module;
the Ethernet physical layer (PHY); and
an Ethernet media access controller (MAC), wherein the Ethernet PHY module and Ethernet MAC, when coupled, are operable to implement hardware layers of an Ethernet protocol stack.

5. The power over Ethernet network device of Claim 4, or method of Claim 4, wherein Ethernet PHY module is operable to implement physical layer functions associated with data rates selected from the group of data rates consisting of: 10Mbps, 100Mbps, 1Gbps, and 10 Gbps.

6. The power over Ethernet network device of Claim 1, or method of Claim 2, wherein the PoEs further comprise:
a protection circuit, wherein the protection circuit is operable to:
couple to the plurality of twisted pairs; and
provide surge protection across the plurality of twisted pairs;
a diode bridge, wherein the diode bridge is operable to rectify a power signal received from the plurality of twisted pairs;
an integrated circuit (IC) that further comprises a power feed circuit conductively coupled to the surge protection circuit and diode bridge network, and wherein the power feed circuit is operable to:
pass the received data signal to a network physical layer (PHY) module; and
pass the received power signal to a power management module, wherein the power management module is operable to at least partially power the network device from the received power signal.

7. The power over Ethernet network device of Claim 1, or method of Claim 2, wherein the PoEs are operarable to:
sensing a current associated with each power signal of the plurality of power signals;
balance the plurality of power signals with an active control circuit and based on the sensed current associated with each power signal of the plurality of power signals, wherein the balanced plurality of power signal are passed to the power management module; and
at least partially powering the second PoE device from the plurality of balanced power signal.

8. The power over Ethernet network device of Claim 1, or method of Claim 2, wherein the IC further comprises a power feed circuit, comprising:
a plurality of input nodes operable to receive a first power signal;
a plurality of differential transistor pairs wherein each transistor of the differential transistor pairs electrically couples to one input node, wherein the differential transistor pairs are operable to produce a second power signal;
active control circuit(s) operable to sense the second power signal passed by each transistor, and wherein the active control circuit(s) are operable to apply a feedback signal to the differential transistor pairs; and
at least one twisted pair coupled to each differential transistor pair, wherein the twisted pair couples to a network connector, and wherein the twisted pairs are operable to pass the Ethernet power signal.

9. The power over Ethernet network device of Claim 1, or method of Claim 2, wherein the IC further comprises a power feed circuit, wherein the power feed circuit is operable to:
exchange data signals with a network physical layer (PHY) module, Ethernet switch, and the network connector; and
balance the network power signal as directed by a power source equipment (PSE) controller, wherein the network power signal comprises a plurality of power signals drawn from an isolated power supply.

10. The power over Ethernet network device of Claim 1, or method of Claim 2, wherein the IC further comprises a power feed circuit, wherein the power feed circuit comprises:
two differential transistor pairs wherein each transistor of the differential transistor pairs is operable to pass an Ethernet power signal;
two pairs of impedance sense resistors, wherein each of the impedance sense resistors is coupled to a single transistor of the differential transistor pairs, wherein each of the impedance sense resistors is operable to pass Ethernet power signals received from a drain of the coupled transistor;
an amplifier coupled to the drains of each of the transistors within a coupled differential transistor pair, wherein the amplifier are operable to:
amplify a differential voltage across the pair of impedance sense resistors coupled to the differential transistor pair; and
apply a feedback signal to a gate of each of the transistors within the differential transistor pair coupled to the amplifier, wherein the feedback signal is based on the differential voltage, wherein the feedback signal forces the Ethernet power signal passed by each of the transistors in the differential transistor pair to be equal; and
a pair of output nodes, wherein one output node is associated with each of the differential transistor pairs, and wherein the pair of output nodes feed power to the Ethernet network PD.

11. The power over Ethernet network device of Claim 1, or method of Claim 2, wherein the IC further comprises a power feed circuit, wherein the power feed circuit couples to an insertion loss control limit circuit operable to supply an insertion loss limit to the power feed circuit, the insertion loss control limit circuit comprising:
a first amplifier operably coupled to a pair of network power signals, wherein the amplifier is operable to generate a power estimate signal associated with the network power signals;
a rectifier operable to convert the power estimate signal into a single ended rectified power estimate; and
a loop filter operable to produce an insertion loss control limit, wherein the insertion loss control limit is based on the received pair of network power signals.

12. The power over Ethernet network device of Claim 1, or method of Claim 2, wherein the IC further comprises:
a DC-DC converter operable to receive a first DC signal and produce a second DC signal;
a network physical layer (PHY) module, wherein the network PHY module is powered by the second DC signal;
a power feed circuit electrically coupled to the DC-DC converter and network PHY module, wherein the power feed circuit is operable to:
exchange data signals with the network PHY module; and
pass a combined data and power signal to a network connection as directed by a power source equipment (PSE) controller, wherein the power signal is based on the first DC signal; and
a power switch operable to couple a local ground shared by the DC-DC converter and power feed circuit to a common substrate ground coupled to the network PHY module.

13. The power over Ethernet network device of Claim 1, or method of Claim 2, wherein ground protection is provided to the IC by:
electrically coupling IC component structures, wherein at least one IC component comprises a low voltage component and at least one IC component comprises a high voltage component; and
providing a common substrate ground to the coupled IC component structures, wherein the common substrate ground prevents a ground of individual IC component structures from floating.
